# EUROPEAN PATENT APPLICATION

(11) **EP 2 045 600 A1**
(43) Date of publication of application: **08.04.2009**
(21) Application number: 08020176.7
(22) Date of filing: 16.09.2005
(51) Int. Cl.: G01N 29/265, G01N 29/22, G01N 23/16, G01N 23/18, G01N 29/28

(54) **Transmission type inspection apparatus and method with the transmitter and the receiver being mutually magnetically attracted across the planar object to be inspected**

(30) Priority: 16.09.2004 US 943088; 16.09.2004 US 943135; 24.01.2005 US 41601
(62) Divisional of application: 05797711.8
(71) Applicant: THE BOEING COMPANY, Chicago, IL 60606-2016 (US)
(72) Inventor: The designation of the inventor has not yet been filed
(74) Representative: McLeish, Nicholas Alistair Maxwell

(57) **Abstract**

An apparatus and method for inspecting a structure are provided which include probes with sensing elements, such as ultrasonic transducers and x-ray sources and x-ray detectors, and are disposed proximate opposite surfaces of a structure, where only one of the probes need be driven. A tracking probe may be magnetically coupled to a driven probe and move in coordination therewith. Ring magnets may be used in the driven and tracking probes to provide the magnetic coupling and align sensing elements disposed in the centers of the ring magnets. The probes may include bearings, such as ball and socket bearings or fluid bearings, for supporting the structure and maintaining the desired orientation and spacing of the probes relative to the structure.; A fluid, such as water or pressurized air or the fluid of a fluid bearing, may be used as a couplant between an ultrasonic transducer and the structure. A water column skirt may be used with a probe employing ball bearings for support. A flow moderating skirt may be used with a probe employing a fluid bearing for support.

## Description

### CROSS-REFERENCE TO RELATED APPLICATIONS

The contents of co-pending U.S. Patent Application 10/943,088, entitled "Magnetically Attracted Inspecting Apparatus and method Using a Ball Bearing," filed September 16, 2004; U.S. Patent Application 10/943,135, entitled "Magnetically Attracted Inspecting Apparatus and Method Using a Fluid Bearing," filed September 16, 2004; and U.S. Patent Application No. 11/041,601, entitled "Real-Time X-Ray Scanner and Remote Crawler Apparatus and Method," filed January 24, 2005, are incorporated by reference in their entireties.

### FIELD OF THE INVENTION

The present invention relates generally to an apparatus and method for inspecting a structure and, more particularly, to using a fluid or ball bearing with a magnetically coupled inspection probe and performing x-ray inspection techniques with a magnetically coupled inspection probe.

### BACKGROUND

Non-destructive inspection (NDI) of structures involves thoroughly examining a structure without harming the structure or requiring its significant disassembly. Non-destructive inspection is typically preferred to avoid the schedule, labor, and costs associated with removal of a part for inspection, as well as avoidance of the potential for damaging the structure. Non-destructive inspection is advantageous for many applications in which a thorough inspection of the exterior and/or interior of a structure is required. For example, non-destructive inspection is commonly used in the aircraft industry to inspect aircraft structures for any type of internal or external damage to or flaws in the structure. Inspection may be performed during manufacturing of a structure and/or after a structure has been put into service. For example, inspection may be required to validate the integrity and fitness of a structure for continued use in manufacturing and future ongoing use in-service. However, access to interior surfaces is often more difficult or impossible without disassembly, such as removing a part for inspection from an aircraft.

Among the structures that are routinely non-destructively tested are composite structures, such as composite sandwich structures and other adhesive bonded panels and assemblies. A shift toward bonded materials dictates that devices and processes are available to ensure structural integrity, production quality, and life-cycle support for safe and reliable usage of bonded materials. In this regard, composite structures are commonly used throughout the aircraft industry because of the engineering qualities, design flexibility and low weight of composite structures, such as the stiffness-to-weight ratio of a composite sandwich structure. As such, it is frequently desirable to inspect composite structures to identify any flaws, such as cracks, voids or porosity, which could adversely affect the performance of the composite structure. For example, typical flaws in composite sandwich structures, generally made of one or more layers of lightweight honeycomb or foam core material with composite or metal skins bonded to each side of the core, include disbonds which occur at the interfaces between the core and the skin or between the core and a septum intermediate skin.

Various types of sensors may be used to perform non-destructive inspection. One or more sensors may move over the portion of the structure to be examined, and receive data regarding the structure. For example, a pulse-echo (PE), through transmission (TT), or shear wave sensor may be used to obtain ultrasonic data, such as for thickness gauging, detection of laminar defects and porosity, and/or crack detection in the structure. Resonance, pulse echo or mechanical impedance sensors may be used to provide indications of voids or porosity, such as in adhesive bondlines of the structure. High resolution inspection of aircraft structure is commonly performed using semi-automated ultrasonic testing (UT) to provide a plan view image of the part or structure under inspection. While solid laminates may be inspected using one-sided pulse echo ultrasonic (PEU) testing, composite sandwich structures typically require through-transmission ultrasonic (TTU) testing for high resolution inspection. In through-transmission ultrasonic inspection, ultrasonic sensors such as transducers, or a transducer and a receiver sensor, are positioned facing the other but contacting opposite sides of the structure. An ultrasonic signal is transmitted by at least one of the transducers, propagated through the structure, and received by the other transducer. Data acquired by sensors, such as TTU transducers, is typically processed by a processing element, and the processed data may be presented to a user via a display. However, many structures are difficult to accurately inspect using PE or TTU scanning. X-ray inspection may be preferred for certain situations because of the high flaw resolution and ability to image flaws that are not parallel to the surface and without the use of a couplant. X-ray inspection could be used for close-out inspection of hooded wings, spar e-beams, and complex composite sandwich structures. X-ray inspection systems expose film that can be analyzed. Recently, CCD (charge coupled device) and CMOS (complementary metal oxide semiconductor) detectors have been used for the imaging, rather than film.

Non-destructive inspection may be performed manually by technicians who typically move an appropriate sensor over the structure. Manual scanning generally consists of a trained technician holding a sensor and moving the sensor along the structure to ensure the sensor is capable of testing all desired portions of the structure. In many situations, the technician must repeatedly move the sensor side-to-side in one direction while simultaneously indexing the sensor in another direction. For a technician standing beside a structure, the technician may repeatedly move the sensor right and left, and back again, while indexing the sensor between each pass. In addition, because the sensors typically do not associate location information with the acquired data, the same technician who is manually scanning the structure must also watch the sensor display while scanning the structure to determine where the defects, if any, are located in the structure. The quality of the inspection, therefore, depends in large part upon the technician's performance, not only regarding the motion of the sensor, but also the attentiveness of the technician in interpreting the displayed data. Thus, manual scanning of structures is time-consuming, labor-intensive, and prone to human error. In addition, typical x-ray inspection applications operate with high power emissions which prevent manual NDI x-ray inspection.

Semi-automated inspection systems have been developed to overcome some of the shortcomings with manual inspection techniques. For example, the Mobile Automated Scanner (MAUS®) system is a mobile scanning system that generally employs a fixed frame and one or more automated scanning heads typically adapted for ultrasonic inspection. A MAUS system may be used with pulse-echo, shear wave, and through-transmission sensors. The fixed frame may be attached to a surface of a structure to be inspected by vacuum suction cups, magnets, or like affixation methods. Smaller MAUS systems may be portable units manually moved over the surface of a structure by a technician.
However, for through-transmission ultrasonic inspection and x-ray inspection, a semi-automated inspection system requires access to both sides or surfaces of a structure which, at least in some circumstances, will be problematic, if not impossible, particularly for semi-automated systems that use a fixed frame for control of automated scan heads.

Automated inspection systems have also been developed to overcome the myriad of shortcomings with manual inspection techniques. For example, the Automated Ultrasonic Scanning System (AUSS®) system is a complex mechanical scanning system that employs through-transmission ultrasonic inspection. The AUSS system can also perform pulse echo inspections, and simultaneous dual frequency inspections. The AUSS system has robotically controlled probe arms that must be positioned proximate the opposed surfaces of the structure undergoing inspection with one probe arm moving an ultrasonic transmitter along one surface of the structure, and the other probe arm correspondingly moving an ultrasonic receiver along the opposed surface of the structure. Another example robotic system is the x-ray inspection system used at the William-Gateway Structured Repair Facility is Mesa, Arizona, for inspection of F-18 tail sections. Conventional automated scanning systems, such as the AUSS-X system and the William-Gateway x-ray system, therefore require access to both sides or surfaces of a structure which, at least in some circumstances, will be problematic, if not impossible, particularly for very large or small structures. To maintain the transmitter and receiver in proper alignment and spacing with one another and with the structure undergoing inspection, the AUSS-X system has a complex positioning system that provides motion control in ten axes. This requirement that the orientation and spacing of the transmitter and receiver be invariant with respect to one another and with respect to the structure undergoing inspection is especially difficult in conjunction with ultrasonic inspection of curved structures.

Furthermore, manual, semi-automated, and automated scanning systems typically are limited in the size of a structure that can be inspected, generally limited to areas just a few meters square and typically limited to much smaller areas, although some larger, more complicated systems are available. For example, conventional x-ray inspection systems are gantry systems that cannot reach the full extent of the inspection area of a large part because the scan envelope of the system is limited. Stiffness and weight limitations often restrict the distance a manual, semi-automated, or automated system may be able to extend inspection devices over a structure for inspection. Thus, large composite structures may not be capable of complete inspection. For example, contemporary inspection methods are not well suited for inspecting a Sea Launch payload fairing with a diameter of approximately four meters, a cylindrical length of approximately five meters, and an overall length of over twelve meters.

To increase the rate or speed at which the inspection of a structure is conducted, a scanning system may include arrays of inspection sensors, i.e., arrays of source transmitters and detectors or receivers. As such, the inspection of the structure can proceed more rapidly and efficiently, thereby reducing the costs associated with the inspection. Unfortunately, the use of arrays of ultrasonic transmitters and receivers is generally impractical during the scanning of curved structures, such as large-scale curved composite structures. While some array systems may be capable of scanning gently sloping structures, more complicated curved structures typically are impractical to inspect with an array, such as requiring that the array system be flexible. In this regard, conventional ultrasonic scanning systems for inspecting large-scale curved composite parts use water jets to provide water between the surface of the structure undergoing inspection and the ultrasonic transmitter or receiver to effectively couple ultrasonic signals into and out of the structure. In instances in which the ultrasonic probes include an array of ultrasonic transmitters or receivers, it has been difficult to design a corresponding water jet array that does not produce significant interference or crosstalk between the elements of the array.

Accessibility to the structure requiring inspection and particular features thereof is one consideration in choosing a non-destructive inspection device. Access to the structure to conduct inspection may be so limited that manual inspection by a technician or a semi-automated or automated system is not possible, often due to systems requiring access to exterior and interior surfaces of the structure to be inspected. For example, the backside of an inlet duct for an Unmanned Combat Air Vehicle (UCAV) or an F-35 has limited access for inspection. Alignment and positioning of sensors such as transducers is similarly complicated by accessibility to the structure such as inaccessibility to one side of a composite structure.

Accordingly, a need exists for improved non-destructive inspection devices and methods to inspect structures using ultrasonic and x-ray inspection techniques.

### SUMMARY OF THE INVENTION

According to a first aspect of the present invention there is provided an apparatus for inspecting a structure comprising: a first probe structured for traveling over a first surface of the structure, said first probe comprising a magnet and a sensor for inspecting the structure as said first probe is moved over the first surface of the structure; and a second probe structured for traveling over an opposed second surface of the structure, said second probe also comprising a magnet for cooperating with said magnet of said first probe to draw the driven and second probes toward the first and second surfaces of the structure, respectively, wherein magnetic attraction between said driven and second probes causes said second probe to be moved over the second surface of the structure in response to corresponding movement of said first probe and causes said first probe to be moved over the first surface of the structure in response to corresponding movement of said second probe, and wherein at least one of said magnet of said first probe and said magnet of said second probe is a ring magnet.
The magnet of said first probe and said magnet of said second probe may be ring magnets.
The ring magnet of said first probe and said ring magnet of said second probe may be different sizes.
The magnet of said first probe may be a ring magnet, the sensor of said first probe being disposed within said ring magnet. The magnet of said first probe and said magnet of said second probe may be ring magnets. The second probe may further comprise a sensor disposed within said ring magnet of said second probe for receiving signals from said sensor of said first probe. The sensor of said first probe and the sensor of said second probe may have inspection areas of different sizes. The sensor of said second probe and said sensor of said first probe may be ultrasonic transducers.
At least one of said first probe and said second probe may comprise a fluid inlet to provide a couplant between said sensor of said respective probe and said respective surface of the structure. The couplant may be water or air. At least one of said first probe and said second probe further comprises at least one ball bearing between said respective probe and the surface of the structure. The apparatus may further comprise a water column skirt disposed on said first probe, which may comprise a flexible cowling.
The fluid inlet may comprise at least one fluid outlet channel, and the water column skirt may comprise a cylindrical tube disposed around at least one of said fluid outlet channels of said fluid inlet; and a skirting projecting radially outwardly from said cylindrical tube and from said first probe. The distal edge of said skirting from said cylindrical tube and said first probe may comprise a low-friction substance. At least one of said first and second probes may comprise a fluid conduit for injecting a fluid between said respective probe and the surface of the structure to create a fluid bearing. The fluid conduit may comprise at least one fluid inlet; and a plurality of channels to evenly disperse a flow of fluid over the surface of said respective probe in proximity with the respective surface of the structure being inspected. The channels may comprise recesses in the surface of said respective probe proximate to the respective surface of the structure being inspected wherein said recesses are directed radially from the center of said ring magnet to allow fluid to flow radially through the recesses. The channels may distribute fluid between said sensor of said respective probe and the respective surface of the structure being inspected to provide a coupling path for said sensor of said probe. The channels may comprise a plurality of holes in the surface of said probe proximate to the respective surface of the structure being inspected. The fluid may be water or air.
The first probe and said second probe may comprise a fluid conduit for injecting a fluid between said respective probe and the respective surface of the structure to create a fluid bearing, and the first probe and said second probe may use different fluids. For example the first probe may use water to create a water bearing and the second probe may use air to create an air bearing. The first probe may use one of the fluid bearings selected from the group of a water bearing and an air bearing for bearing contact, and the second probe may use one of the fluid bearings selected from the group of a water bearing and an air bearing for bearing contact. The apparatus may further comprise a flow moderating skirt disposed around said respective probe comprising a fluid conduit. The flow moderating skirt may comprise a ring with a round edge. An edge of said flow moderating skirt proximate the respective surface of the structure being inspected may extend beyond the surface of said respective probe. The sensor of said first and second probes may be x-ray sensors, and one of said first and second probes may comprise an x-ray source for emitting radiation for inspecting the structure as the respective probe is moved over the respective surface of the structure and the other of said first and second probes may comprise an x-ray detector for receiving the radiation which represents x-ray inspection data and is capable of being presented as x-ray inspection images. The apparatus may further comprise a display communicably coupled to said x-ray detector for presenting x-ray inspection images captures by the x-ray detector. The x-ray detector may comprise a wireless transmitter for transmitting x-ray inspection data. The respective probe comprising an x-ray source may further comprise an array of x-ray sources and the other of said first and second probes comprising an x- ray detector may further comprise an array of x-ray detectors.
According to a second aspect of the invention there is provided a probe for inspecting a structure comprising: a housing configured for traveling over a first surface of the structure under inspection; a ring magnet carried by said housing; and a sensor disposed within said ring magnet.
The probe may further comprise a fluid inlet supported by said housing and the fluid inlet is in fluid communication with said sensor for distributing fluid between said sensor and the surface of the structure being inspected to provide a coupling path for signals of said sensor.
The probe may further comprise an array of ultrasonic transducers, carried by said housing. The probe may further comprise at least one ball bearing supported by said housing and for contacting the first surface of the structure. The probe may comprise a plurality of at least three ball bearings.
The probe may further comprise a water column skirt disposed on said housing, wherein said fluid inlet comprises at least one fluid outlet channel and said water column skirt is disposed around at least one of said fluid outlet channels. The water column skirt may comprise a flexible cowling.
The fluid inlet may comprise at least one fluid outlet channel, and the water column skirt comprise: a cylindrical tube disposed around at least one of said fluid outlet channels of said fluid inlet; and a skirting projecting radially outwardly from said cylindrical tube and said housing. The distal edge of said skirting from said housing may comprise a low-friction substance.
The housing may comprise: a fluid inlet; and a plurality of channels to evenly disperse a flow of fluid over the surface of said housing in proximity with a surface of the structure being inspected to create a fluid bearing. The channels may comprise recesses in the surface of said housing proximate to the surface of the structure being inspected wherein said recesses are directed radially from the center of said ring magnet to allow fluid to flow radially through the recesses. The channels may distribute fluid between said sensor of said probe and the surface of the structure being inspected to provide a coupling path for said sensor of said probe. The channels may comprise a plurality of holes in the surface of said housing proximate to the surface of the structure being inspected.
The probe may further comprise a flow moderating skirt disposed around said plurality of channels. The flow moderating skirt may comprise a ring with a round edge. The round edge of said flow moderating skirt may comprise a low-friction surface designed to be proximate the surface of the structure being inspected and having a lower coefficient of friction than another portion of said flow moderating skirt. The flow moderating skirt may comprise inner and outer layers of rubber affixed together to form a ring with an flat portion and a round edge. The flow moderating skirt may comprise a low-friction substrate affixed to the exterior of the round edge. An edge of said flow moderating skirt proximate the surface of the structure being inspected may extend beyond the surface of said housing.
According to a third aspect of the present invention there is provided a probe for inspecting a structure comprising: a housing configured for traveling over a first surface of the structure under inspection; at least one magnetic coupling device carried by the housing; and at least one x-ray inspection sensor carried by the housing for inspecting the structure when the probe is moved over the structure. The x-ray inspection sensor may be an x-ray source or an x-ray detector. In particular the x-ray inspection sensor may be a microfocus x-ray tube or a CMOS x-ray detector.
The probe may further comprise a wireless transmitter communicably coupled to the x-ray inspection sensor.
The x-ray inspection sensor may be an x-ray detector, where said x-ray detector is communicably coupled to a display for imaging inspection data.
The probe may further comprise a visual inspection sensor carried by the housing, wherein said x-ray inspection sensor is a positional encoder, an optical encoder, a linear encoder, a camera, a directional sensor, or wheel encoder that is communicably coupled to a display. The probe may further comprise a motor device for moving the probe over the surface.
Optionally at least one magnetic coupling device comprises a ring magnet, and the x-ray inspection sensor is disposed within the ring magnet. The probe may further comprise at least one contact member connected to the housing, the contact member being selected from the group consisting of a wheel, a ball bearing, a fluid bearing, a skid, a tread, and a combination thereof.
According to a fourth aspect of the present invention there is provided a method of inspecting a structure comprising: positioning a first probe on a first surface of the structure and a second probe on an opposed second surface of the structure; establishing magnetic attraction between the first and second probes such that the first and second probes are drawn toward the first and second surfaces of the structure, respectively, for holding the probes on the first and second and second surfaces of the structure, respectively; aligning the first and second probes using a ring magnet of the first probe and a ring magnet of the second probe; moving one of the first and second probes along a respective surface of the structure, wherein magnetic coupling between the probes causes the other probe to be moved along the opposed surface of the structure; and transmitting inspection signals into and receiving inspection signals from the structure as one of the first and second probes is moved along a respective surface of the structure and the other probe is correspondingly moved along the opposed surface of the structure.
The method may further comprise the step of coupling inspection signals between at least one of the driven and second probes and the first and second surfaces of the structure, respectively. Optionally the step of coupling inspection signals comprises the step of pumping a fluid between the respective probe and the respective surface.
The step of positioning a first probe on a first surface of the structure and a second probe on an opposed second surface of the structure may be performed by supporting at least one of the first and second probes on a respective surface of the structure with at least one ball bearing such that the respective probe moves along the respective surface of the structure by rolling the respective probe along the respective surface on the at least one ball bearing. The method may further comprise the step of pumping a fluid between at least one of the first probe and the second probe and the first and second surfaces of the structure, respectively, to create a fluid bearing between the respective probe and the respective surface. The method may further comprising the step of coupling inspection signals between at least one of the first probe and the second probe and the first and second surfaces of the structure, respectively. Optionally the method further comprises the step of pumping water between at least one of the first probe and the second probe and the first and second surfaces of the structure, respectively, to create a water bearing between the respective probe and the respective surface. Alternatively the method further comprises the step of pumping air between at least one of the first probe and the second probe and the first and second surfaces of the structure, respectively, to create an air bearing between the respective probe and the respective surface.
According to a fifth aspect of the present invention there is provided a method of inspecting a structure comprising: positioning a first probe on a first surface of the structure and a second probe on an opposed second surface of the structure; establishing magnetic attraction between the first and second probes such that the first and second probes are drawn toward the first and second surfaces of the structure, respectively, for holding the probes on the first and second surfaces, respectively; moving one of the first and second probes along a respective surface of the structure, wherein magnetic coupling between the probes causes the other probe to be moved along the opposed surface of the structure; and transmitting x-ray inspection signals from an x-ray source carried by one of the first and second probes into the structure and receiving x-ray inspection signals through the structure by an x-ray detector carried by the other probe while the probes are moved along the structure.
Optionally the method further comprises the step of aligning the first and second probes using a ring magnet of the first probe and a ring magnet of the second probe. The method may further comprise the step of displaying x-ray inspection data. The method may further comprise the step of wirelessly transmitting x-ray inspection data from the x-ray detector, optionally the method may further comprise the steps of receiving the transmitted data and displaying the received data.
The method may further include the step of adjusting the incident angle of the inspection signals with respect to the first surface of the structure, and, optionally, adjusting the angle of the x-ray detector corresponding to the adjustment of the incident angle of the inspection signals.

The present invention provides improved apparatus and methods for inspecting structures using magnetically coupled inspection probes. Embodiments of the present invention typically use ball bearings or a fluid bearing for supporting an inspection probe. Alternatively, or in addition, embodiments of the present invention combine x-ray inspection technologies with magnetically coupled inspection probe technologies to provide x-ray inspection devices that are portable, can be used for various applications, and provide inspection results in real-time.

An improved apparatus and method for inspecting a structure provides bearing support for magnetically coupled inspection probes. An inspection apparatus or method according to an embodiment of the present invention may advantageously provide increased access to surfaces of a structure for inspection and allow for continuous inspection of large areas of a structure while maintaining alignment and positioning of sensing transducers and/or receivers. Methods and apparatus of the present invention use probes including respective sensing elements, such as ultrasonic transducers or an x-ray source and x-ray detector, that are disposed proximate opposed surfaces of a structure. For continuous scanning applications only one of the probes need be driven due to the magnetic coupling between the poles. Thus, methods and apparatus of the present invention are advantageously adapted to inspect structures in which one surface of the structure is relatively inaccessible and structures which are exceptionally large. Such devices can be used for high resolution flaw detection in structures of varying shapes and sizes, including metal and composite structures such as bondlines, weldlines, and lap joints. Embodiments of apparatus and methods of the present invention can be used for inspection of structures during manufacture or in-service. Additionally, embodiments of the method and apparatus of the present invention are capable of operating in an array mode, even in conjunction with the inspection of curved structures, thereby increasing the speed and efficiency with which such structures may be inspected and correspondingly reducing the cost associated with the inspection. Further, embodiments of methods and apparatus of the present invention permit the probes to be suspended against and glide along the respective surfaces of the structure, thereby reducing or eliminating the necessary sophistication of a motion control system that is typically required by conventional scanning systems to maintain the probes in a predefined orientation with respect to each other and at a predefined spacing from the respective surface of a structure undergoing inspection. Permitting the probes to contact or suspend above and ride along the respective surfaces of the structure also may maintain alignment between the probes and/or the sensors of the probes. Contact with the surface also permits accurate position measurement of the inspection device during continuous scanning, such as keeping an optical or positional encoder in physical and/or visual contact with the surface of the structure under inspection. Similarly, embodiments of the present invention can replace or reduce the need for conventional inspection techniques, including film-based x-ray inspection techniques and large, expensive fixed inspection robots and gantries, thereby reducing the cost of structural integrity inspection. Further, embodiments of the present invention provide new inspection capabilities for x-ray inspection of large and small structures, structure with limited-access features, and complex features of structures.

An apparatus of the present invention includes a driven probe disposed proximate a first surface of the structure and a tracking probe disposed proximate an opposed second surface of the structure. To facilitate the coordinated movement of the tracking probe in conjunction with the driven probe, at least one of the driven probe and the tracking probe advantageously include at least one magnet or other magnetic coupling device, such as a ferromagnetic material insert, which draw the driven and tracking probes toward the first and second surfaces of the structure, respectively. Ring magnets may be used in the driven and tracking probes to provide magnetic coupling of the two probes to the respective surfaces of the structure. Additionally, the magnetic attraction between the magnets of the driven and tracking probes causes the tracking probe to be moved over the second surface of the structure in response to corresponding movement of the driven probe. In operation, the driven probe is moved along the first surface of the structure in response to the application of motive force, such as from manual control or by means of a robotic arm or other positioning system. In contrast, the tracking probe generally moves along the second surface of the structure in response to the movement of the driven probe and independent of the application of any other motive force. The tracking probe generally passively follows the movement of the driven probe such that the tracking probe need not be engaged by a robotic arm or other positioning system. The tracking probe can therefore be disposed on the backside or other surface of a structure that is relatively inaccessible.

The driven probe includes a sensing element for inspecting a structure as the driven probe is moved along the first surface of the structure. While the sensing element may be a camera or other sensor device, the sensing element is typically an ultrasonic transducer or x-ray source or detector. Typically, the tracking probe also includes a sensing element, such as an ultrasonic transducer or x-ray source or detector. For a probe having a ring magnet, a sensor, such as an ultrasonic transducer, may be positioned at the center of the ring magnet; thus, as the ring magnets of the probes align the two probes on respective surfaces of the structure, the sensors of the probes are also aligned at the centers of the ring magnets. Embodiments of the present invention also provide for wireless inspection operation. By wirelessly transmitting inspection data, such as digital images from x-ray detectors, a probe can operate on battery power without any wired connections for power or data transmission.

If ultrasonic transducers are used, ultrasonic transducers may be an ultrasonic transmitter, an ultrasonic receiver, or both. To facilitate the coupling of an ultrasonic signal between the ultrasonic transducer of the driven probe and the structure, a couplant may be disposed between the ultrasonic transducer and the respective surfaces of the structure. While air or water jets may be used as a couplant, the driven probe of one advantageous embodiment may instead include an inlet for fluid that is pumped or bubbled between the ultrasonic transducer and the first surface of the structure. In this regard, the driven probe may include a housing in which the magnet and the ultrasonic transducer are disposed, and which defines the inlet. The housing may also define a fluid conduit to direct fluid flow from the inlet to a plurality of channels to disperse the flow of fluid between the probe and the second surface of the structure. The plurality of channels may be, for example, a series of radially directed recesses or a plurality of holes. The fluid conduit may be in fluid communication with that portion of the ultrasonic transducer that faces the first surface of the structure. Thus, the fluid that is pumped or bubbled between the ultrasonic transducer and the first surface of the structure may facilitate coupling of the ultrasonic signals produced by the ultrasonic transducer into the structure. Likewise, the tracking probe may include an inlet for fluid that is pumped or bubbled between the ultrasonic transducer of the tracking probe and the second surface of the structure. In this regard, the tracking probe can also include a housing in which the magnet and the ultrasonic transducer are disposed, and which defines the inlet. The housing may also define a fluid conduit to direct fluid flow from the inlet to a plurality of channels to disperse the flow of fluid between the probe and the first surface of the structure. The plurality of channels may be, for example, a series of radially directed recesses or a plurality of holes. Again, the fluid conduit may be in fluid communication with that portion of the ultrasonic transducer of the tracking probe that faces the second surface of the structure. Thus, ultrasonic signals emerging from the structure may be effectively coupled to the ultrasonic transducer of the tracking probe by the fluid that is pumped or bubbled therebetween. By pumping or bubbling fluid between the ultrasonic transducers and the respective surfaces of the structure, water jets are not required such that the ultrasonic transducers of the driven and tracking probes may include arrays of ultrasonic transducers, thereby permitting the rate at which the structure is inspected to be increased and the associated inspection cost accordingly decreased.

If x-ray sensors are used, one probe will include an x-ray source, and the other probe will include an x-ray detector. An x-ray source may be a microfocus x-ray tube; an x-ray detector may be a CMOS x-ray detector. One of the probes may also include a display communicably coupled to the x-ray detector for presenting x-ray inspection images captured by the x-ray detector. A probe may also include a wireless transmitter communicably coupled to the x-ray detector for transmitting x-ray inspection data captured by the x-ray detector.

According to one advantageous embodiment, the driven probe includes a bearing contact, such as a ball and socket bearing or a fluid bearing, such as a water bearing or an air bearing, for contacting the first surface of the structure, supporting or suspending the driven probe, maintaining orientation and spacing of the probe with respect to the surface, and reducing the frictional drag of the driven probe on the surface of the structure being inspected to permit smooth translation of the driven probe across the surface of the structure. Thus, the driven probe may translate along the first surface of the structure with the orientation of the driven probe relative to the first surface of the structure and the spacing of the driven probe relative to the first surface of the structure being maintained by the bearing contact between the driven probe and the first surface of the structure without requiring the complex motion control systems used by conventional scanning systems. Likewise, the tracking probe may include a bearing contact, such as a ball and socket bearing or a fluid bearing, for contacting the second surface of the structure, supporting the tracking probe, maintaining orientation and spacing of the probe with respect to the surface, and reducing the frictional drag of the tracking probe on the surface of the structure being inspected to permit smooth translation of the tracking probe across the surface of the structure and magnetic coupling with the driven probe. Like the driven probe, the tracking probe may therefore be maintained in a predefined orientation and at a predefined spacing relative to the second surface of the structure without requiring the complex motion control systems used by conventional scanning systems. This independence from the motion control systems used by conventional scanning systems may further reduce the cost of the apparatus of the present invention and permit the tracking probe to be moved in a controlled fashion over a surface of a structure that is relatively inaccessible for a robotic arm or other conventional motion control system. The driven and tracking probes may contact the surface of the structure using a ball and socket bearing. Alternatively, the driven and tracking probes may contact the surface of the structure with the fluid of a fluid bearing, such as water, pressurized air, or other gases, liquids, or gas-liquid mixtures. The fluid of a fluid bearing may also be used as a couplant between a sensor, such as an ultrasonic sensor, and the surface of the structure being inspected. However, the fluid that is used for fluid bearing contact need not pass in front of the transducer, i.e., between the transducer and the surface of the part under inspection, such as to be used as a couplant, but may pass only between the probe and the surface of the structure, such as in an embodiment with holes or recesses of a fluid channel disposed around the transducer of a probe. When using ball and socket bearings, a fluid, such as water or air, may be used as a couplant between an ultrasonic transducer of a probe and a surface of the structure, such as bubbling water from an inlet in a probe. Other fluids, such as a gases, liquids, or gas-liquid mixtures, may be used as couplants between a sensor of a probe and a surface being inspected.

A probe employing ball bearings for support and translation of the probe and employing a liquid, such as water, as a couplant between an ultrasonic transducer of a probe and a surface of the structure may include a water column skirt to form a path between the face of the transducer proximate the surface of the structure under inspection and the surface of the structure. A water column skirt may be a flexible cowling made from or covered with a low-friction substance, such as a Teflon@ material available from E.I. DuPont Nemours and Company of Wilmington, Delaware, disposed on the surface of the probe proximate the surface of the part under inspection and around liquid flow channels on the surface of the probe proximate the surface of the structure under inspection.

A probe employing a fluid bearing, such as an air bearing, may include a flow moderating skirt to create a pocket to contain the fluid acting as a fluid bearing. A flow moderating skirt may be a rubber ring disposed around a probe, including around fluid flow channels on the surface of the probe proximate the surface of the structure under inspection. A flow moderating skirt may be positioned with a rounded edge protruding below the surface of the probe proximate the surface of the structure under inspection.

According to another aspect of the present invention, a method of inspecting a structure is provided. In this regard, the driven probe is positioned proximate the first surface of the structure, and the tracking probe is positioned proximate the opposed second surface of the structure. For example, driven and tracking probes may be supported by ball bearing contact with, or suspended by fluid bearing contact above, the first and second surfaces of the structure, respectively, thereby simplifying the alignment and spacing of the probes relative to the respective surfaces of the structure and relative to the other probe or a sensor of the other probe. The method of inspecting a structure also establishes magnetic attraction between the driven and tracking probes such that the driven and tracking probes are drawn toward the first and second surfaces of the structure, respectively. The driven probe is then moved along the first surface of the structure, such as in response to the application of a motive force by a robotic arm or other positioning system. The movement of the driven probe and the magnetic attraction between the driven and tracking probes causes the tracking probe to be correspondingly moved along the second surface of the structure. Advantageously, the tracking probe moves along the second surface of the structure independent of the application of any motive force. Thus, the tracking probe may be disposed proximate a relatively inaccessible surface of a structure since the movement of the tracking probe need not be controlled by a robotic arm or other positioning system.

As the driven probe is moved along the first surface of the structure, inspection signals, such as ultrasonic or x-ray inspection signals, are transmitted to the structure by an inspection sensor, such as an ultrasonic transmitter or an x-ray source, of one of the probes and are received by an inspection sensor, such as an ultrasonic receiver or an x-ray detector, of the other probe following propagation through the structure. Inspection data may be wirelessly transmitted from the probe receiving the inspection data following propagation of the inspection signal through the structure. If x-ray inspection signals are used, a method may adjust the incident angle of the x-ray inspection signals from the x-ray source. The driven and/or tracking probes may be advantageously spaced from the respective surface by bearing contact. For example, ball and socket bearings may be used for bearing contact between the probes and the structure to contact the surface of the structure to permit smooth translation of the probes along the surfaces of the structure. Similarly, for example, a fluid may be pumped between the driven and/or tracking probes and the first and second surfaces of the structure, respectively, to create a bearing contact between the probes and the structure to suspend the probes above the respective surfaces and to permit smooth translation of the probes along the surfaces of the structure. If ultrasonic inspection signals are used, to effectively couple the ultrasonic signals between the driven and tracking probes and the structure, a fluid may be pumped or bubbled between the sensors of the driven and tracking probes and the first and second surfaces of the structure, respectively, while ultrasonic signals are transmitted into and received from the structure. In embodiments in which fluid is used to create bearing contact, the fluid may also serve as the couplant. Additionally, or alternatively, separate air or water jets may be used to provide the couplant.

These and other characteristics, as well as additional details, of the present invention are further described in the Detailed Description with reference to these and other embodiments.

### BRIEF DESCRIPTION OF THE DRAWING(S)

Having thus described the invention in general terms, reference will now be made to the accompanying drawings, which are not necessarily drawn to scale, and wherein:

Figure 1 is a schematic diagram of two probes of an apparatus according to embodiments of the present invention magnetically coupled to surfaces of a structure for inspection;

Figure 2A is a magnified schematic diagram of two probes of an apparatus according to embodiments of the present invention magnetically coupled to surfaces of a structure for inspection;

Figure 2B is another magnified schematic diagram of two probes of an apparatus according to embodiments of the present invention magnetically coupled to surfaces of a structure for inspection;

Figure 3 is a bottom perspective view of an exploded diagram of a probe according to another embodiment of the present invention including ball and socket contact members;

Figure 4 is an overhead perspective view of a probe according to an embodiment of the present invention;

Figure 5 is a bottom perspective view of a probe according to an embodiment of the present invention;

Figure 6 is a perspective view of a probe according to an embodiment of the present invention including a yoke attachment;

Figure 7A is an exploded view of a probe according to an embodiment of the present invention;

Figure 7B is yet another exploded view of the probe according to an embodiment of the present invention;

Figure 8 is an overhead perspective view of a probe according to an embodiment of the present invention;

Figure 9 is a bottom perspective view of a probe according to an embodiment of the present invention;

Figure 10A is a side perspective view of a probe according to an embodiment of the present invention including a yoke attachment;

Figure 10B is a bottom perspective view of the probe according to an embodiment of the present invention including a yoke attachment;

Figure 10C is yet another side perspective view of the probe according to an embodiment of the present invention including a yoke attachment;

Figure 11 is a bottom perspective view of a probe employing a water column skirt according to an embodiment of the present invention;

Figure 12 is a cross-sectional schematic diagram of a probe employing a water column skirt according to an embodiment of the present invention;

Figure 13 is a cross-section of a wire frame diagram of a flow moderating skirt for a fluid bearing embodiment of the present invention;

Figure 14A is an overhead perspective wire frame diagram of a flow moderating skirt for a fluid bearing embodiment of the present invention;

Figure 14B is an overhead perspective diagram of a flow moderating skirt for a fluid bearing embodiment of the present invention;

Figure 15 is a bottom perspective diagram of a flow moderating skirt for a fluid bearing embodiment of the present invention;

Figure 16 is a cross-section of a wire frame schematic diagram of a probe with a flow moderating skirt according to an embodiment of the present invention;

Figure 17 is a bottom perspective diagram of a probe with a flow moderating skirt according to an embodiment of the present invention;

Figure 18 is a schematic diagram of an inspection apparatus using x-ray inspection techniques;

Figure 19 is a schematic diagram of another inspection apparatus using x-ray inspection techniques for inspecting a pi-joint bond;

Figure 20 is a schematic diagram of yet another inspection apparatus using x-ray inspection techniques;

Figure 21 is a schematic diagram of yet another inspection apparatus using x-ray inspection techniques in an array; and

Figure 22 is a schematic diagram of an inspection probe using x-ray inspection techniques.

### DETAILED DESCRIPTION

The present invention will be described more fully with reference to the accompanying drawings. Some, but not all, embodiments of the invention are shown. The invention may be embodied in many different forms and should not be construed as limited to the embodiments described. Like numbers and variables refer to like elements and parameters throughout the drawings.

### I. MAGNETICALLY COUPLED INSPECTION PROBES

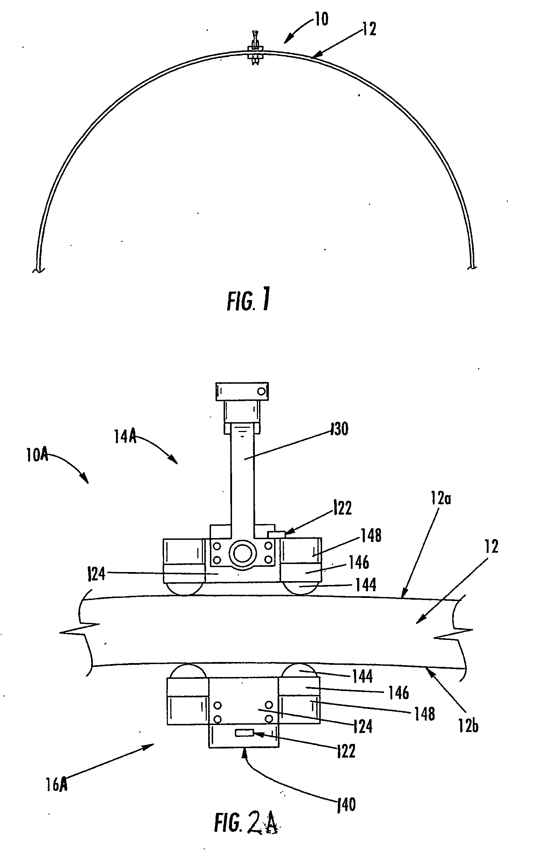

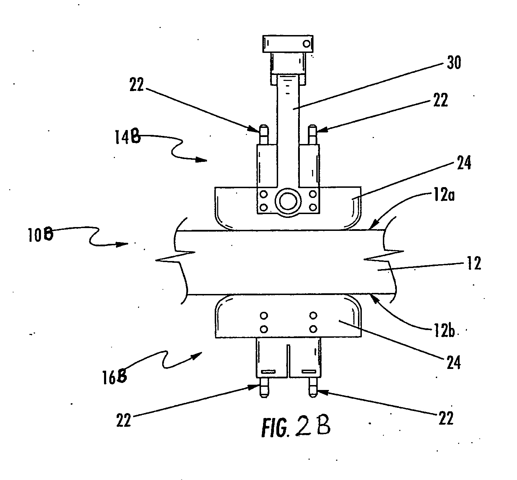

Referring now to Figures 1, 2A, and 2B, an apparatus **10, 10A, 10B** for inspecting a structure **12** according to one embodiment of the present invention is depicted. The apparatus can inspect a variety of structures formed of various materials. Since the apparatus relies to some extent upon the establishment of magnetic fields through the structure, however, the structure is preferably non-magnetic, that is, the structure preferably has no magnetic permeability. Structures that may be inspected with an embodiment of an inspection device of the present invention may include, but are not limited to, composites, non-ferromagnetic metals (e.g. aluminum alloy, titanium alloy, or aluminum or titanium hybrid laminates such as GLARE or Ti/Gr), and polymers. It should be noted that the surfaces, and the material therebetween such as intermediate surfaces commonly referred to as septums, which collectively define the material through which the driven and tracking probes are magnetically coupled, preferably comprise a non-ferromagnetic material because the magnetic coupling between the probes would be diminished or eliminated by a ferromagnetic material located between the actuating portion and the inspecting portions.

While a portion of a relatively simple but large structural panel **12** is depicted during the course of an inspection in Figures 1, 2A, and 2B, a structure may be any myriad of shapes and/or sizes. In addition, the structure that is inspected may be used in a wide variety of applications, including in vehicular applications, such as in conjunction with aircraft, marine vehicles, automobiles, space craft and the like, as well as other non-vehicular applications, such as in conjunction with buildings and other construction projects. Moreover, the structure may be inspected prior to assembly or following assembly, as desired.

An apparatus **10, 10A, 10B** according to one embodiment of the present invention includes a driven probe **14A, 14B** disposed proximate a first surface **12a** of the structure **12** and a tracking probe **16A, 16B** disposed proximate an opposed second surface **12b** of the structure. Embodiments of the present invention may be used with an inspection device similar to that disclosed in U.S. Patent 6,722,202 to Kennedy directed to magnetically attracted probes for inspection of a structure, which is incorporated by reference. The shape and size of an inspection probe, and housing thereof, which may employ the present invention is not limited to the specific embodiments described and disclosed herein or in the 6,722,202 patent or referenced co-pending applications, but may be any shape or size capable of operating in accordance with the present invention. As described below, the driven and tracking probe may be disposed in contact with the first and second surfaces of the structure, respectively. Driven and tracking probes are advantageously initially positioned in alignment so as to be directly opposed one another or otherwise in positional correspondence with one another, as shown in Figures 1, 2A, and 2B. As shown in Figures 1, 2A, and 2B, for example, this alignment provides a linear relationship between the probes **14A, 14B, 16A, 16B** such that one probe is not translated or offset laterally across the surface of the structure 12 from the other probe. As described below, this positional relationship or correspondence between the driven and tracking probes is maintained as the probes are moved along the respective surfaces of the structure.

Each probe **14A, 14B, 16A, 16B** includes a ring magnet **18, 118** that may be disposed within a housing **24, 124.** The magnets of the probes magnetically attract the driven and tracking probes toward the respective surfaces of the structure **12**. Using probes with ring magnets on opposing surfaces of a structure also aligns the two probes with respect to the other. By comparison, magnetically coupled inspecting probes using bar magnets, flat magnets, cylindrical magnets, and the like, require configurations of magnets and/or ferromagnetic materials to align the probes. Such configurations typically cannot provide the flexibility of ring magnets which may permit a tracking probe to rotate freely with respect to a magnetically coupled driven probe while maintaining alignment of inspection sensors located within the center of the ring magnets in the driven and tracking probes. Magnetically coupled probes employing embodiments of the present invention may alternatively, or in addition, use magnets and/or ferromagnetic materials to provide alignment and/or magnetic attraction between probes. While each probe may include any number of magnets, each probe need only include one magnet or other magnetic coupling device, such as a ring magnet, which reduces the size, weight, cost, and complexity of the probes. Magnets of the illustrated embodiments may be ring magnets formed of neodymium iron boron, which have advantageously have greater magnetic flux (around 12,000 gauss) than standard ceramic or ferrite magnets (around 3,900 gauss). Further embodiments of the invention may include magnets of different material, such as Samarium Cobalt or Alnico and/or electromagnets or other magnetic coupling means. The term "magnet" as used herein is inclusive of electromagnets. The probes of the present invention may further comprise magnetic shunting mechanisms to control the magnetic flux of the magnetic couplings, a non-limiting example being rare earth metal switched magnetic devices disclosed in U.S. Patent 6,180,928. While various types of ring magnets may be used, the driven and tracking probes of one embodiment include permanent ring magnets, such as NdFeB ring magnets. The size of ring magnets for both the driven and tracking probes may be dependent, at least in part, upon the weight of the respective probes, the thickness of the structure undergoing inspection, and the material that forms the structure undergoing inspection. For example, a ring magnet of a probe may be 4 inches in diameter and 1 inch in height with a magnetic flux of 3.9k Gauss across the surface of the ring magnet if the magnet is a standard ferrite ring magnet or 12k Gauss if the magnet is an NdFeB ring magnet. Additionally, driven and tracking probes may include ring magnets having either the same or different sizes. Different size ring magnets may help to maintain alignment of the probes and may permit adjustment of the weight of a probe, such as to reduce the weight of a probe which hangs beneath the surface of a structure.

Although ring magnets may be used independently to positionally align probes of embodiments of the present invention, rotational alignment of probes may be enhanced by incorporating at least one additional magnet or ferromagnetic material to at least one of the probes. The magnetic polarity of at least one additional magnet of one of the probes may be selected and/or oriented to be such that the respective additional magnet is repelled by one or more of the magnets of the other probe or attracted by one or more of the magnets or a ferromagnetic material of the other probe. For example, if one of the probes includes ferromagnetic material, such as a plug of ferromagnetic material, the other probe may include an additional magnet positioned such that the probes are properly positioned with respect to one another when the ferromagnetic plug and the additional magnet are aligned since the ferromagnetic plug and the additional magnet of the other probe will be attracted to one another when these elements are properly aligned to position the probes with rotational alignment. Similarly, if the probes each include two additional magnets, where the two additional magnets of each probe have opposite polarities, when the probes are misaligned, the additional magnets of the probes would be repelled and produce a rotation of the probes until the additional magnets of the probes align with the additional magnets of the other probe that are of the opposite polarity. As such, these types of additional magnets and ferromagnetic materials may be used as rotational alignment keys for an apparatus of an embodiment of the present invention.

In determining the type of magnets **18,118** to be included in a probe **14A, 14B, 16A, 16B**, the weight of the magnets, the surface area of the magnets, and the increased demagnetization effects attributable to the cylindrical length to diameter ratio and/or cylindrical length to radial width ratio of the magnet are generally taken into account. In this regard, magnets that are relatively thin and flat may have a substantial surface area so as to generate significant magnetic flux. However, these magnets are generally inefficient since they suffer from increased demagnetization effects due to their relatively small cylindrical length to diameter ratio and/or cylindrical length to radial width ratio relative to thicker, more rod-like ring magnets having a smaller surface area.

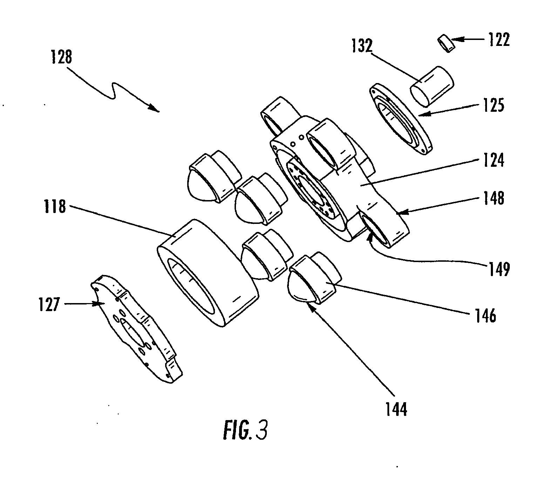

At least one of the probes **14A, 14B, 16A, 16B**, usually the driven probe **14A, 14B,** includes a sensing element **32, 132** for inspecting the structure **12** as the probe is moved over the respective surface of the structure. Further with respect to Figures 3-9, the sensing element **32, 132** may advantageously be disposed or positioned in the center of a ring magnet **18,118** of a probe, such as affixed within a central cavity **40, 140** of a housing **24, 124**. A sensing element may be a camera, an x-ray sensor, pulse echo sensor, or the like, but generally is an ultrasonic transducer, such as an ultrasonic transmitter and/or an ultrasonic receiver. For example, the ultrasonic transducer may be a 1 MHz immersion transducer from Agfa/Krautkramer of Lewistown, PA.

Such probes provide for through transmission ultrasonic (TTU) inspection. Ultrasonic signals are transmitted into the structure by the ultrasonic transducer of one probe and received by the ultrasonic transducer of the other probe to detect flaws, including cracks, voids and/or porosity. However, only one probe needs to include a sensing element **32, 132** for inspection from one side of the structure **12**. For example, one of the probes may include an ultrasonic transducer that is operated in a reflection or pulse echo mode. Thus, the same ultrasonic transducer both transmits and receives ultrasonic signals in this exemplary alternative embodiment. As another alternative example, the sensing element may be a camera that captures images of the respective surface of the structure from one side thereof. In these alternative embodiments, the probe that does not include a sensing element effectively serves to magnetically attract the probe with the sensing element to the respective surface of the structure. In the embodiments described, however, both the driven and tracking probes include a respective sensing element, such as an ultrasonic transducer or an x-ray source and an x-ray detector.

A probe of an embodiment of the present invention may also include a housing **24, 124** in which a magnet **18, 118** and the sensing element are disposed and/or retained. The housing may be constructed of various non-magnetic materials and, in one embodiment, is constructed of Delrin® material available from E.L DuPont Nemours and Company of Wilmington, Delaware.

If ultrasonic inspection signals are used, to facilitate the coupling of ultrasonic signals between ultrasonic transducer(s) of the driven and/or tracking probes **14A, 14B, 16A**, **16B** and the structure 12, a couplant may be used. While air or water jets may be used as a couplant, the driven and/or tracking probes **14A, 14B, 16A, 16B** and, in particular, the respective housings may include an inlet **22, 122** for a fluid, typically a liquid such as water, that is pumped between an ultrasonic transducer and a respective surface **12a, 12b** of the structure. While fluids may be used as a couplant to provide a coupling path for the ultrasound signals between a transducer and a structure, liquids, such as water, are particularly well suited to decrease the density differential between the transducer, air, and the surface of the structure. Gases such as air may be used as couplants, but typically require use of lower frequency ultrasonic signals. Because of the increased effectiveness of water as a couplant, air is not traditionally used as a couplant for ultrasonic inspection. While ambient pressure gases may be used as couplants, pressurized gases provide improved coupling paths and provide increased signal-to-noise ratios than non-pressurized gases for non-contact or airborne ultrasonic transducers; thus, for example, the pressurized air of an air bearing is a better couplant than ambient air. Increasing the pressure of the gas reduces the transfer loss at the interfaces at the transducer and surface of the structure allowing higher inspection frequencies. A waterless, non-contact or airborne, through-transmission ultrasonic transducer may be used with air or pressurized air. Also, a pressure control valve with a bleed value may be used to maintain a constant pressure for an air bearing, or other gas bearing. Improved flaw resolution may be obtained by using improved couplants. For example, the signal-to-noise ratio increases and the ultrasonic frequency may be increased. Both of these improvements, associated with increased fluid pressure, result in improved flaw resolution than would normally be obtained by non-pressurized couplants such as ambient air between a transducer and a structure.

As shown in Figures 2A-10C, the housing **24, 124** includes a fluid conduit from one or more fluid inlets **22, 122** to fluid dispersion channels, such as recesses or holes. The fluid conduit and/or the fluid dispersion channels may also be in fluid communication with a portion of the sensing element **32**, **132**, such as an ultrasonic transducer, that faces a surface of the structure **12** proximate the probe. The sensing element **32, 132**, such as an ultrasonic transducer, may be recessed within the housing **24, 124.** Thus, fluid that is introduced through the inlet **22, 122** flows through the fluid conduit **23, 123,** including an internal channel, defined by the housing **24, 124** and effectively fills the gap between the ultrasonic transducer and the surface of the structure **12**. Advantageously, the fluid flows smoothly over and between the ultrasonic transducer and the surface of the structure with no bubbles, cavitation or turbulence that could otherwise detrimentally affect the signal to noise ratio. The shape and size of the housing does not dictate the present invention, but may be adapted to incorporate or facilitate features of the present invention. For example, the shape and size of the housing **2A, 124** shown in Figures 2A-10C are designed to provide support for the ring magnet **18, 118** and fluid inlets **22, 122**. The shape is further designed to provide smooth edges which may be proximate a surface of a part to avoid edges of the housing from interfering with the operation of embodiments of the present invention.

The fluid may be supplied from a reservoir connected to the inlet **22, 122**. A tube press fit around the inlet **22, 122** leads to a flow control valve. A flow control valve, also referred to as a pressure control valve, may be used to control the flow of fluid through the inlet **22, 122.** For example, the flow control valve may be adapted to control the flow of fluid through the inlet **22, 122** based upon a measure of fluid volume or fluid pressure flowing through the inlet **22, 122** or another portion of the fluid system. A flow control valve may be located proximate the inlet **22, 122** or may be in fluid communication with the inlet **22, 122,** such as where the flow control valve is located proximate the fluid source and controls the flow of fluid through tubes to the inlet **22, 122**. By positioning a flow control valve remote from an inlet prevents adding additional weight and complexity to the probe. A flow control valve or an inlet **22**, **122** may include a bleed to maintain constant pressure and prevent excess pressure or volume of fluid.

### A. BALL BEARING CONTACT MEMBERS

As generally shown with respect to Figure 2A, an embodiment of the present invention may use ball bearings to support an inspection probe. Figure 3 is a perspective view of an exploded diagram of a probe according to an embodiment of the present invention including ball and socket bearings as seen from the side and below in the exploded diagram. A housing **124** may include a central cavity **140** to retain a sensor (not shown) such as an ultrasonic transducer. The embodiment of Figure 3 has an inverted compressed housing **124**, disposed around a ring magnet **118**, with two caps **125, 127** and ball and socket bearings **128**. Alternatively, a ring magnet may be retained in a housing with a cap integrally formed by the housing or with a recess for the ring magnet such that the housing does not require a cap or caps to retain the ring magnet. The ball and socket bearings **128** may include spherical bearings **144** each recessed into and housed by a socket **146**. The sockets **146** may be attached to the housing or may be integrally connected to and formed by the housing. If the sockets may be removed from the housing, the ball and socket bearings **128** may be exchanged, such as after a spherical ball is worn due to extended use or to use a different type of ball for a different structure surface. If the sockets may be exchanged, sockets that retain different sizes of balls may be used for a single housing, such as where different sizes of ball bearings are desired for different structure surfaces. Similarly, if the balls may be removed from the respective sockets that are formed by the housing, the balls may be exchanged for new, different, or replacement balls. In one embodiment of the present invention, three or more spherical balls are held in three or more corresponding separate sockets to facilitate the rolling inspection of two magnetically attracted probes on opposite surfaces of a structure. The probes are capable of rolling across the surface of the structure under test.

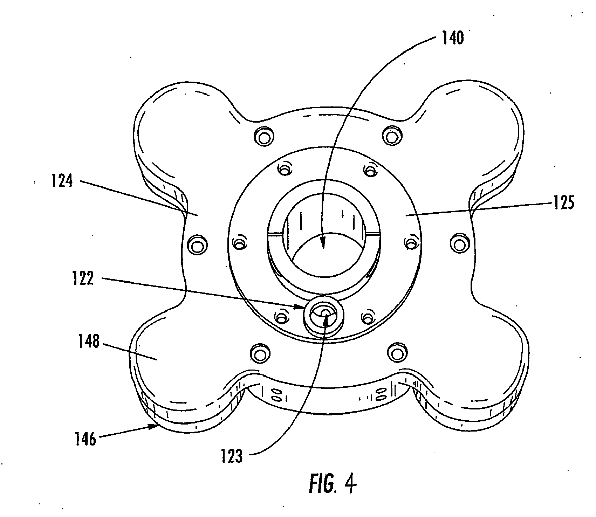

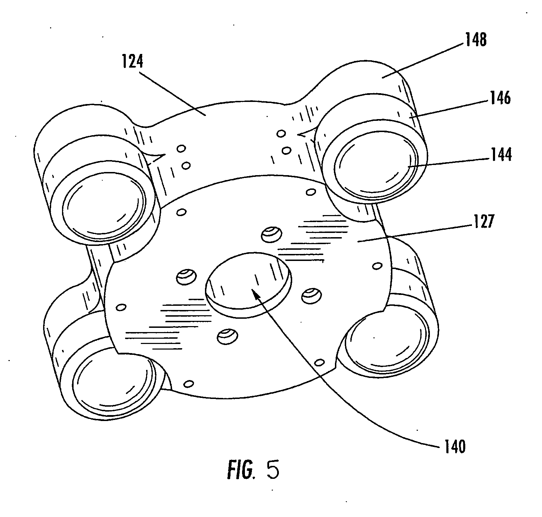

Figure 4 is a perspective view of a probe according to an embodiment of the present invention as seen from above the probe. Figure 5 is a perspective view of the probe as seen from below the probe, from the surface side of the probe. The housing **124** includes a collar defining a central cavity **140** for holding a sensor such as an ultrasonic transducer. The housing **124** also includes an outer perimeter in which the sockets **146** are integrally formed and into which respective balls **144** may be inserted. Between the outer perimeter and central collar of the housing **124** is disposed a ring magnet. A first cap **125** and a second cap **127** secure the ring magnet within the housing **124**. A fluid inlet **122** permits the flow of fluid through the inlet and the housing. In a ball bearing embodiment of the present invention, fluid such as water may be used as a couplant between an ultrasonic transducer and the surface of the structure being inspected. An inlet may be part of a fluid conduit that permits the flow of fluid through the housing.

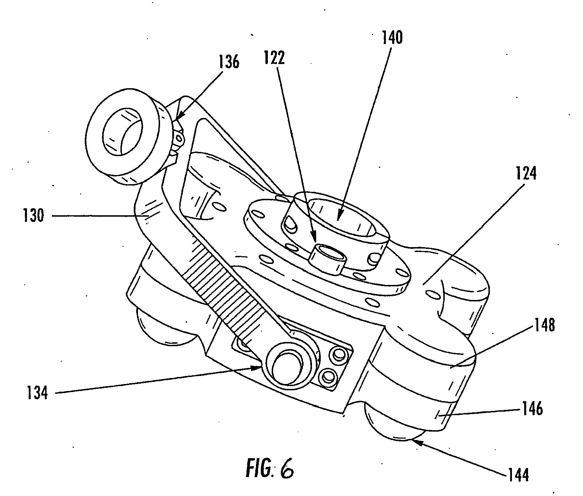

Figure 6 is a perspective view of a probe according to one embodiment of the present invention including a yoke attachment. A probe may include, or have attached, a handle or other connector, such as a yoke attachment **130**, for controlling and driving the probe across a surface of a part. For example, a yoke attachment for embodiments of the present invention may include at least two points to provide multi-axis rotation of an inspection probe. The yoke attachment **130** may include hinge pivots **134** on either side of a housing and at a point **136** above the housing connecting to each of the side pivots **134**. Alternatively or additionally, a rotating pivot (not shown) may be included at a point above the housing connecting to each of the side pivots **134.** An attachment for an embodiment of the present invention may be gimbaled to permit the probe to remain in a magnetically coupled position regardless of the axes of motion of a connection providing movement of the probe across the surface of a structure under inspection. The described yoke attachment and similar handles and/or connectors enable inspection of parts with significant contours, including where a handle or connector is attached to a manual lever or robotic arm fixed to a control system for the robotic arm. Because the probes of embodiments of the present invention are magnetically coupled, only a driven probe need be controlled, such as attached to or held by a yoke.

As shown in Figure 2A, the driven and tracking probes may advantageously be disposed in ball bearing contact with respective surfaces **12a, 12b** of a structure **12**. Ball bearing contact may provide suspension of a probe above a surface of a structure. Typically, the ball and socket bearings extend outwardly from the face or surface of the housing **124** that faces the respective surface of the structure. Ball bearings may be used to reduce the fiction between the inspection probe and the surface of the structure under inspection, such as to displace the probe from contacting the surface of the structure. Further, use of ball bearing contact between the inspection probe and the surface of the structure may avoid any undesirable damage or other marring of the respective surfaces of the structure as the result of contact with the probes, such as to prevent scratching of soft skins or denting of panels of the skins. Use of ball bearing contact may also provide smooth translation of an inspection probe over the surface of a structure to allow an inspection probe to maintain an intended direction, maintain alignment of transducers and/or receivers in inspection probes, and allow continuous scanning of a surface regardless of size, smoothness, or flatness of the surface.

### B. FLUID BEARING EMBODIMENTS

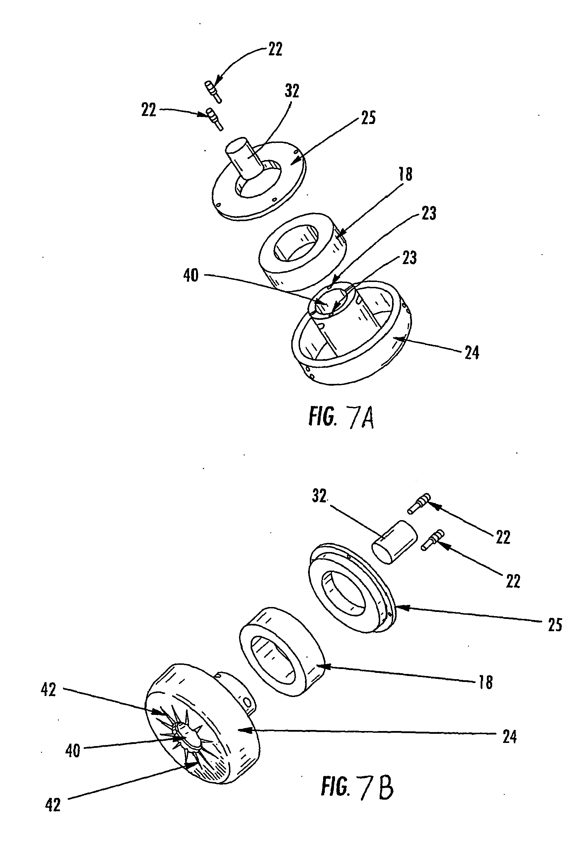

Figures 7A and 7B show perspective views of an exploded diagram of a probe according to an embodiment of the present invention using a fluid bearing. Figure 7A shows a view from the side and above the probe; Figure 7B shows a view from the side and below the probe. A housing **24** may include a central cavity **40** to retain a sensor such as an ultrasonic transducer. The housing **24** may form a cylindrical portion around the central cavity **40** around which a ring magnet **18** may be disposed. The housing **24** may further form a cup below and around the ring magnet **18** to form the bottom and outer surface of the housing **24**. A cap **25** may be attached to the housing **24** to secure the ring magnet **18** into the cup formed in the housing **24** to retain the ring magnet **24**. Alternatively, a ring magnet **18** may be sealed in a housing with a cap integrally formed by the housing. The bottom of the housing **24** may include channels to direct the flow of a fluid to create a fluid bearing. These channels may be recesses **42**, holes, or other outlets for a fluid. The fluid may flow from the inlets **22** through the housing **24** to the channels. If the fluid is also used as a couplant, the fluid may pass from the inlets **22**, through the housing **24**, over an ultrasonic transceiver affixed within the central cavity **40** of the housing **24**, and out through the channels.

As shown in Figures 7B, 9, and 10B, a star pattern of recesses may be defined by the surface of the housing of the probe proximate the surface of the structure to be inspected. A star pattern provides an even distribution and flow of fluid over the face of the probe to improve the effectiveness of a fluid bearing. The fluid flows down the radially directed recessed arms of the star pattern and moves out of the recesses between the flat portion of the face of the probe and the surface of the structure being inspected.

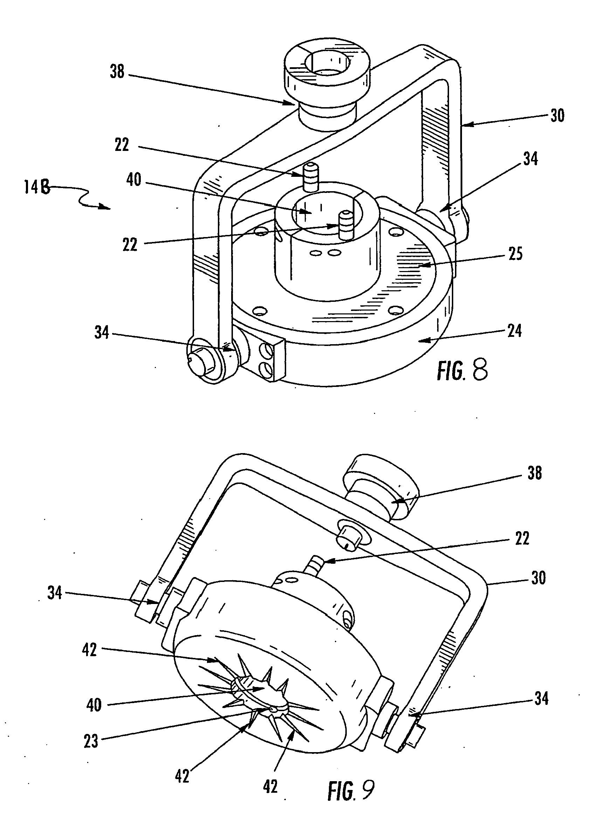

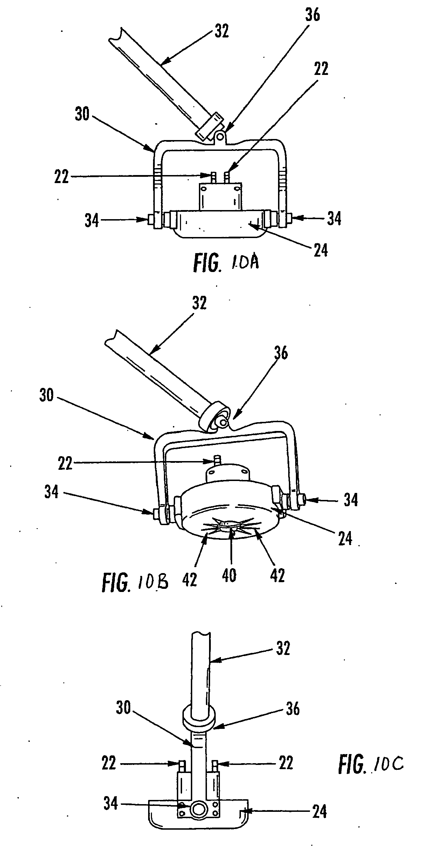

Figures 8 and 9 are perspective views of a probe according to an embodiment of the present invention. Figure 8 shows a view from the side and above the probe; Figure 9 shows a view from the side and below the probe. The probe may include, or have attached, a handle or other connector, such as a yoke attachment **30**, for controlling and driving the probe **14** across a surface of a part. For example, a yoke attachment for embodiments of the present invention may include at least two points to provide multi-axis rotation of an inspection probe. The yoke attachment **30** may include hinge pivots **34, 36** on either side **34** of a housing and at a point **36** above the housing connecting to each of the side pivots **34**. Alternatively or additionally, a rotating pivot **38** may be included at a point above the housing connecting to each of the side pivots **34**. An attachment for an embodiment of the present invention may be gimbaled to permit the probe to remain in a magnetically coupled position regardless of the axes of motion of a connection providing movement of the probe across the surface of a structure under inspection. The described yoke attachment and similar handles and/or connectors enable inspection of parts with significant contours, including where a handle or connector is attached to a manual lever **32** or robotic arm fixed to a control system for the robotic arm. Because the probes of embodiments of the present invention are magnetically attached, only a driven probe need be controlled, such as attached to or held by a yoke. Figures 10A, 10B, and 10C show perspective views of a driven probe according to an embodiment of the present invention including a yoke attachment with a manual or robotic arm extension **32**.

As shown in Figures 1 and 2B, the driven and tracking probes may advantageously be disposed in contact with or in bearing contact with respective surfaces **12a, 12b** of a structure **12**. Bearing contact may provide suspension of a probe above a surface of a structure, such as by a fluid bearing. For example, a water bearing or an air bearing may support and suspend a probe in bearing contact with a surface of a structure. To facilitate contact of the probes with the respective surfaces of the structure and to avoid any undesirable damage or other marring of the respective surfaces of the structure as the result of contact with the probes, the driven and tracking probes can each also include at least one contact member, such as a ball and socket bearing or a skid, which can be used in conjunction with or independently from a fluid bearing. Typically, the contact member(s) extend outwardly from the face or surface of the housing **24** that faces the respective surface of the structure. Various types of contact members can be used, such as skids or the like. Skids may include a Teflon® material available from E.I. DuPont Nemours and Company of Wilmington, Delaware, on a surface of the skid for contact with the surface of the structure being inspected and to provide for translation thereacross. Skids may be beneficial for fluid bearing embodiments of probes of the present invention such as to prevent damage or marring of a surface of a structure under test when initially placing a probe on the structure or magnetically coupling two probes on opposite sides of the part, particularly when the fluid bearing may not be in use, such as before fluid is provided to the probe or after fluid is stopped flowing to the probe. Alternatively, a probe may include one or more ball and socket bearings that contact the respective surface of the structure and that permit the probe to ride therealong when not using a fluid bearing. Fluid bearings, such as water bearing and air bearings, and ball bearings may be used to maintain the spacing and orientation of the probes. Water, air, or ball bearings may be used to reduce the fiction between the inspection probe and the surface of the structure under inspection, such as to displace the probe from contacting the surface of the structure using hydraulic flotation or a hydrostatic bearing. Further, use of bearing contact between the inspection probe and the surface of the structure may prevent scratching of soft skins or denting of panels of the skins. Use of bearing contact may also provide smooth translation of an inspection probe over the surface of a structure to allow an inspection probe to maintain an intended direction, maintain alignment of transducers and/or receivers in inspection probes, and allow continuous scanning of a surface regardless of size, smoothness, or flatness of the surface.

In embodiments in which the probes include a water or air bearing, a fluid bearing, also referred to as a fluid dynamic bearing, may be created by pumping a thin layer of fluid between the surface of a housing for a probe which is adjacent to the structure under inspection and the surface of the structure under inspection adjacent to the probe. The pressure created by the magnetic attraction of the housing pulling the probe towards the structure on top of the fluid creates the fluid bearing, where the housing for the probe rests upon the thin layer of fluid between the probe and the surface of the structure under inspection. Variables such as fluid pressure and density, viscosity, and temperature affect the functioning of a fluid bearing. For example, an air bearing would typically result in a narrower fluid bearing than a water bearing because the density of the air is lower, allowing the pressure of the housing being magnetically attracted and thereby pulled towards the surface of the structure to compress the air into a narrow fluid bearing. Although typical fluid bearings use a seal to maintain hydrostatic fluid in a defined space, pumping fluid into the space for the fluid bearing at the rate that the fluid escapes from the fluid bearing would maintain sufficient volume and pressure of fluid in the space for the fluid bearing required to achieve a fluid bearing. Alternatively, a flow moderating skirt described below may be used to aid in maintaining fluid pressure for a fluid bearing. As described herein, a fluid used for a fluid bearing may also be used to provide a couplant between a sensor and a surface of the structure under inspection. For example, the water of a water bearing may flow between the transmitting end of an ultrasonic transducer and the adjacent surface of the part under inspection and then may flow between a surface of the housing for the probe and an adjacent surface of the structure under inspection to produce a fluid bearing.

By permitting contact or bearing support between the driven and tracking probes **14A, 14B**, **16A, 16B** and the respective surfaces **12a, 12b** of the structure **12**, and by the magnetic attraction between the ring magnets of the probes, the orientation and alignment of the probes and the sensing elements of the probes may generally be maintained without requiring the orientation of the probes to be controlled by means of a complex motion control system or other type of positioning system. Additionally, the bearing contact or support between the driven and tracking probes and the respective surfaces of the structure may similarly maintain a consistent spacing between the respective sensing elements and the structure, without requiring complex motion control systems or other positioning systems. Further, the use of magnetically attracted inspection probes of embodiments of the present invention permit continuous scanning techniques such as manual scanning of large portions of a surface or an entire surface by comparison to point-by-point or grid-type inspection methods that may commonly be used for manual, semi-automated, and automated scanning systems. Because magnetically attracted probes maintain alignment of the transducers, an inspection area may be as large as the entire structure and a single operator may be able to inspect the structure. Enabling inspection of an entire structure rather than discrete points or areas for inspection may improve the ability to detect imperfections in the structure and ensure structural integrity of a part.

Embodiments of the present invention may be scaled and adapted to be driven by a MAUS or AUSS system or other automated or semi-automated system or used as a manual inspection tool. For example, a yoke attachment to a magnetically attracted scanning probe may be connected to a MAUS or AUSS scanning bridge for in-service through-transmission ultrasonic inspection of a composite sandwich structure. This type of arrangement enables C-scan images of in-service TTU inspection data, such as using a MAUS system.

The operation of the apparatus **10, 10A, 10B** of the present invention will now be described in conjunction with driven and tracking probes **14A, 14B, 16A, 16B** configured to conduct a through transmission ultrasonic inspection. However, the driven and tracking probes may be used in other manners as described below, including, but not limited to, through-transmission x-ray inspection. By way of example of the operation of one embodiment of the driven and tracking probes, however, the driven and tracking probes are disposed proximate to and generally in contact with the opposed first and second surfaces **12a, 12b** of a structure **12** while maintaining alignment and magnetic attraction between the probes. Fluid, such as water, may then be bubbled through the inlet **22, 122** of each probe and between the ultrasonic transducers and the respective surfaces **12a, 12b** of the structure **12**. Bearing contact, such as ball bearings and fluid bearings may be used to maintain adequate spacing between the probe and the surface of the part under inspection. In such a manner, the bearing contact may be used to prevent the probe from contacting and possibly damaging the surface of the part. Further, the bearing contact provides the probe the ability to translate along the surface of the part for continuous scanning. The ultrasonic transducers are activated such that the ultrasonic transducer of one probe, such as the driven probe **14A, 14B,** emits ultrasonic signals into the structure. Although not shown, a drive element, such as a voltage or current source, is generally associated with the ultrasonic transducer of the driven probe so as to actuate the ultrasonic transducer to emit the ultrasonic signals. This drive element may be co-located with the driven probe or may be remote therefrom and electrically connected to the ultrasonic transducer. Correspondingly, the ultrasonic transducer of the other probe, such as a tracking probe **16A, 16B,** receives the ultrasonic signals originally transmitted by the ultrasonic transducer of the driven probe following the propagation of the ultrasonic signals through the structure.

While the ultrasonic signals are transmitted through the structure **12** and fluid is passed over the respective ultrasonic transducers, the driven probe **14A, 14B** is moved along the first surface **12a** of the structure. While the motive force required to move the driven probe along the first surface of the structure may be applied in various manners, the driven probe of the illustrated embodiment includes a handle **30, 130** that may be engaged by a robotic arm **32** or the like. As known to those skilled in the art, a robotic arm can be controlled by a motion control system or other positioning system so as to controllably move the driven probe in a predefined manner and in accordance with a defined pattern along the first surface of the structure. Since the driven probe is in contact with and rides along the first surface of the structure, the motion control system or other positioning system need not be as complex as that required by conventional scanning systems. By way of comparison to the AUSS-X system that requires a motion control system capable of controllably positioning the probes about ten axes, the motion control system used in conjunction with the apparatus **10, 10A, 10B** need only control the probes in five axes.

As a result of the magnetic attraction established between the driven and tracking probes **14A**, **14B, 16A, 16B** and, more particularly, between the magnets **18, 118** of the driven and tracking probes, the tracking probe moves in a like manner and in correspondence with the driven probe without requiring the application of any additional motive force directly to the tracking probe. Thus, the tracking probe moves so as to remain in an aligned, opposed position relative to the driven probe as the driven probe is moved along the first surface **12a** of the structure **12**. As such, the tracking probe need not be engaged by a robotic arm or other positioning system. Accordingly, the tracking probe can be disposed proximate to and can ride along a second surface **12b** of a structure that is relatively inaccessible, such as the interior of a cylindrical structure or other structure having a closed shape.

The ultrasonic signals that are received by the ultrasonic transducer of the tracking probe **16A**, 16B can be stored along with an indication of the time at which the ultrasonic signals are received and/or an indication of the relative position of the tracking probe when the ultrasonic signals are received. The ultrasonic signals may be stored by a memory device that is either co-located with the tracking probe or remote from the tracking probe and electrically connected therewith. By analyzing the ultrasonic signals received by the ultrasonic transducer of the tracking probe, the integrity of the structure **12** as well as any flaws therein can be determined.

By passing fluid between the ultrasonic transducer and the respective surface of the structure **12**, the ultrasonic signals are effectively coupled into and out of the structure in one advantageous embodiment. Moreover, while a single ultrasonic transducer is depicted in Figures 3, 7A and 7B, the driven and/or tracking probes **14A, 14B, 16A, 16B** may include an array of ultrasonic transducers to increase the inspection area since the coupling provided by the fluid permits inspection in an ultrasonic array mode, thereby increasing the speed with which the inspection is performed and correspondingly reducing the cost associated with the inspection.

A tracking probe may include a larger diameter transducer than the transducer of a driven probe. Using a larger tracking probe transducer enables a more uniform signal over a larger area than would a corresponding smaller transducer. Thus, using a larger tracking probe transducer may minimize the effect of small misalignments between the driven probe and tracking probe, and transducers thereof, such as misalignments due to discontinuities in the surfaces of the structure, positional lagging of the tracking head, and gravitational offset.

### II. WATER COLUMN SKIRT

In relation to embodiments using ball bearing contact to support an inspection probe, a water column skirt may be used to maintain a coupling path between a probe and a structure. A fluid, such as water or another liquid, may be used as a couplant between an ultrasonic transducer and the surface of the part under inspection. Using a couplant may help to achieve higher resolution inspection imaging of the part under inspection on a structure that can be wetted by permitting the use of higher frequency inspection signals. A water column skirt may be employed to maintain coupling such as to form a coupling path between the ultrasonic transducer and the surface of the part to permit good coupling from the transmitting transducer through a part under inspection. Use of a water column skirt is advantageous where the ball bearings require the probe to be held apart from the surface of the part, creating a separation between the probe and the surface of the part into and through which a couplant may disperse from the probe. Also, by using a water column skirt, an embodiment of the present invention may be able to use a lesser volume of couplant than if a water column skirt is not used. Accordingly, the couplant may be bubbled or dribbled in lower volume, at a low flow level, through the probe and continue to maintain a coupling path between the ultrasonic transducer and the surface of the part, as the couplant flows out slowly from under the water column skirt. Further, by using a water column skirt, coupling may be maintained with surfaces that exhibit contours, roughness, and other surface discontinuities. Water may be replaced with any suitable fluid which provides a coupling path between a transducer and a surface of a structure under inspection.

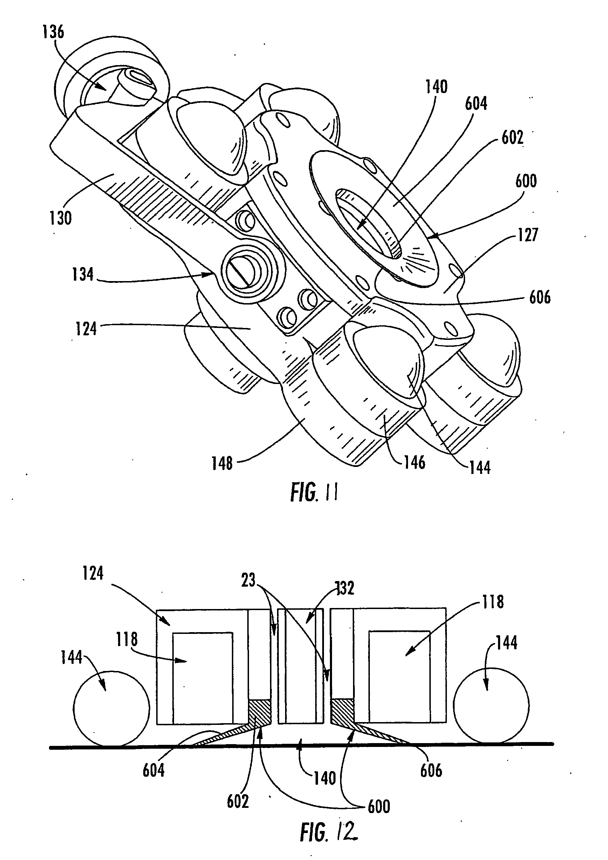

Figure 11 is a perspective view of a probe employing a water column skirt. Figure 12 is a cross-sectional schematic diagram of the probe of Figure 11. A water column skirt **600** may be a flexible cowling which floats over the surface of the part and holds a couplant, such as water or another liquid, in a column to create a path between an ultrasonic transducer and the surface of a part under inspection. A water column skirt may be formed from a pliable, Teflon@ structure or other material in accordance with an embodiment of the present invention. A cap **127** may be formed to permit a water column skirt **600** to mount to the bottom surface of the probe, the surface of the probe adjacent to the surface of the structure under inspection. A water column skirt **600** may be formed with a short, cylindrical tube **602** encircling the transducer **132** within a central cavity **140** of the probe and encircling fluid channels **23** opening on the bottom surface of the probe. A water column skirt **600** may be further formed from a flared, tapered, flexible skirting **604** projecting radially outwardly from the cylindrical tube **602** and downwardly from the probe towards the surface of the structure under inspection. A water column skirt may be shaped and made from materials selected to allow the water column skirt to advantageously flex to adjust for contour changes and other surface discontinuities on the surface of the structure under inspection. For example, a water column skirt may be made of low-friction substance, such as Teflon® or the like, to facilitate smooth translation of the probe over a surface of a part, such as to permit a lip **606** of the flared skirting **604** of the water column skirt **600** to translate over the surface of a structure under inspection with a minimum of frictional drag. As can be seen in Figure 12, only the lip **606**, and any surface material coating thereof such as a low-friction substance, such as Teflon® or the like, of the flared skirting **604** of the water column skirt **600** may contact the surface of the structure under inspection. Further a water column skirt may be shaped and formed from materials selected to allow the water column skirt to advantageously hold a column of couplant between a face of an ultrasonic transducer and the surface of the structure under inspection. For example, a water column skirt should be made from a material stiff enough to support the pressure of a couplant column.

III. FLOW MODERATING SKIRT

In relation to embodiments using fluid bearing contact to support an inspection probe, a flow moderating skirt may be used to control the functioning of the fluid bearing. As a fluid, such as air or pressurized air, is pumped through a fluid conduit of a probe and between the probe and a surface of the structure under inspection to create a fluid bearing, a flow moderating skirt may be employed to control the functioning of the fluid bearing, such as to moderate the flow of fluid which escapes from beneath the probe and reduces the lifting force of the fluid bearing. For example, a flow moderating skirt may provide a pocket to define the fluid bearing. A flow moderating skirt may help to maintain support and smooth translation of the probe across the surface of the structure, such as to assist in avoiding bouncing or vibrating effects caused by contours, roughness, and other discontinuities of a surface of the structure under inspection, particularly when using a probe with a small surface area adjacent to a surface of the structure under inspection, and particularly when using a non-liquid fluid bearing, such as an air bearing which requires high airflow to provide a sufficient lifting force to support a probe.

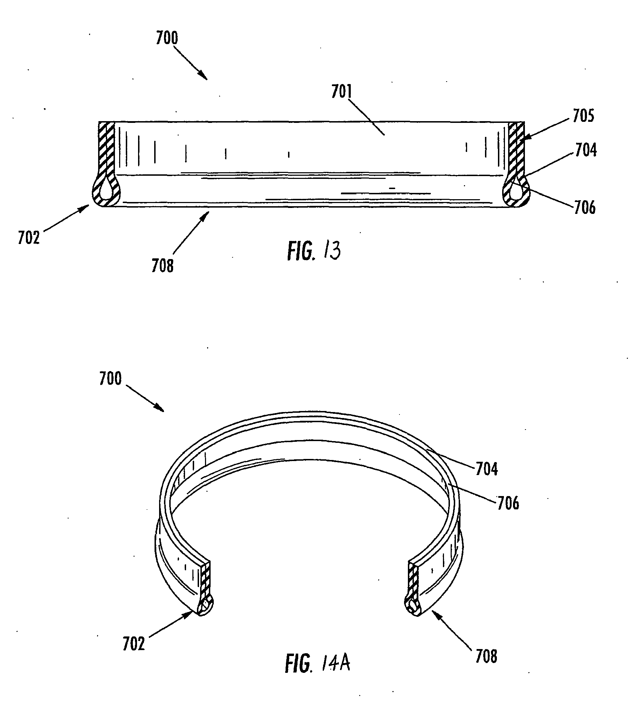

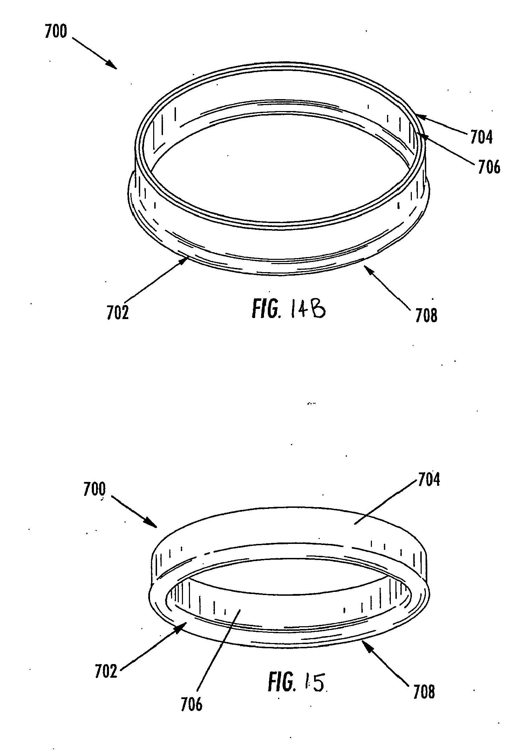

Figure 13 is a wire frame diagram of a flow moderating skirt for a fluid bearing embodiment of the present invention as viewed from a cross-section of a portion of the flow moderating skirt. Figure 14A is a perspective wire frame diagram and Figure 14B is a perspective diagram of a flow moderating skirt for a fluid bearing embodiment of the present invention as viewed from above the flow moderating skirt. Figure 15 is a perspective diagram of the flow moderating skirt shown in Figure 14A and 14B as viewed from below the flow moderating skirt. A flow moderating skirt **700** may be fabricated from a sheet of rubber folded in half lengthwise. The folded sheet of rubber may be bonded along an interior portion **705** where the folded sheets **704, 706** meet to form a seam so as to produce and upper flat portion **701** and a lower round edge **702** as shown in Figures 13, 14A, 14B, 15, 16, and 17. The sheet of rubber may be folded in half around a rod (not shown) to help define the round edge **702** separate from the flat portion **701** during the bonding process. A rigidity or stiffness of a flow moderating skirt, such as provided by two layers of bonded rubber, reduces the tendency of the flow moderating skirt to non-uniformly release air, also referred to as burping air. A low-friction surface, such as Teflon® tape, may be applied to the exterior **708** of the rounded edge **702** of a flow moderating skirt **700**. The use of a smooth, rounded edge of a flow moderating skirt reduces drag or friction between the flow moderating skirt and a surface of a structure under inspection and reduces the tendency of the flow moderating skirt to skid and/or catch on the surface of the structure, such as catching on a rough surface, which tends to pull the leading edge of the probe downward and possibly collapse the flow moderating skirt and disturb the functioning of the fluid bearing. The two ends of the folded and bonded rubber sheet may be bonded or otherwise fixed together to form a ring, as shown in Figures 14A, 14B, 15, and 17. Although described using a rubber sheet, an embodiment of a flow moderating skirt according to the present invention may be formed in other manners and/or using different materials.

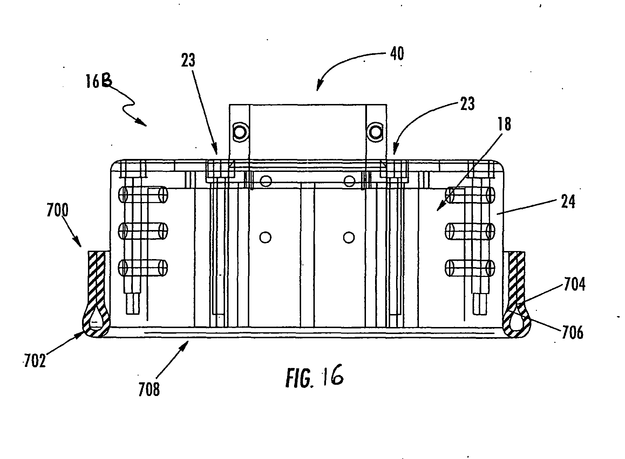

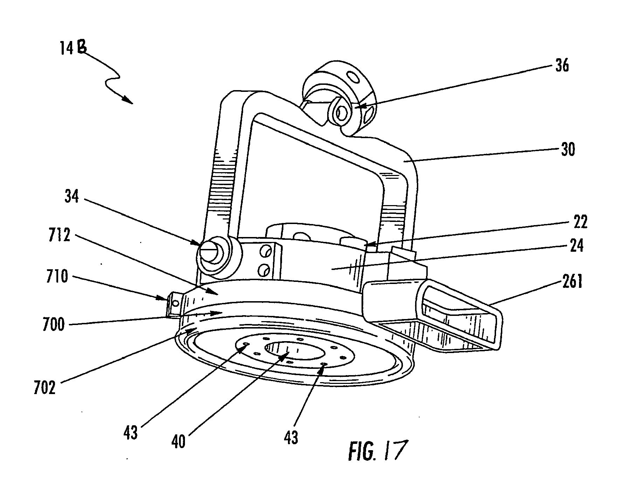

Figure 16 is a wire frame schematic diagram of a probe with a flow moderating skirt according to an embodiment of the present invention as viewed from a cross-section of a portion of the probe and the flow moderating skirt. A flow moderating skirt **700** may be disposed around a probe **16**, such as attached, affixed, or adhered around the housing **24** of a probe **16** and around the fluid conduit channels **23** which disburse the fluid below the probe **16** to form the fluid bearing. Typically, a flow moderating skirt **700** is disposed around a probe **16** such that at least a portion of the round edge **702** of the flow moderating skirt **700** protrudes below the base or face of the probe **16**, that is below the planar surface of the probe **16** proximate the surface of the part under inspection. A flow moderating skirt **700** may be adjustably affixed, such as with a hose clamp **710, 712** shown in Figure 17, around the probe **16** to permit adjustment of the height of the flow moderating skirt **700** with respect to the probe **16**, such as to adjust the protrusion of the round edge **702** of the flow moderating skirt **700** past the surface of the probe **16** proximate a surface of the structure under inspection. In such a manner, a flow moderating skirt **700** may be used to create a smaller or larger pocket for the fluid of a fluid bearing. Such adjustment may also help to account for surface curvature, roughness, and other discontinuities of the surface of the structure under inspection with the flow moderating skirt generally being extended further beyond the surface of the probe in instances of greater surface curvature or roughness or in instances in which larger surface discontinuities are present.

Figure 17 is a perspective diagram of a probe with a flow moderating skirt according to an embodiment of the present invention as viewed from below the probe and the flow moderating skirt. In one example embodiment, a hose clamp **710, 712** may be used to affix a flow moderating skirt **700** around a probe **14**. The ring **710** of a hose clamp may be attached around the upper, flat, edge **701** of the flow moderating skirt **700** to hold the flow moderating skirt **700** in position against the probe **14**.

If water, or another liquid, is used with an embodiment of the present invention, the probe or apparatus will likely include or be used with a reservoir to collect the expelled water and, possibly, recycle the water. For example, if water is used as a couplant and/or to provide a water bearing, the water that spills or drains off of a part may be collected and recycled to be used again as a couplant and/or for a water bearing. Similarly, if a gas is used to provide a fluid bearing, a reservoir such as a containment housing, a sealed room, or the like, may be used to capture and recycle the gas. For example, if an oxygen enriched air mixture or other gaseous mixture, such as a composition of 35% oxygen (O₂), 63.5% nitrogen (N₂), 1% argon (Ar), and 0.5% carbon dioxide (CO₂) with trace amounts of neon (Ne), helium (He), methane (CH₄), etc., is found to increase coupling of an ultrasonic signal and, therefore, used as a couplant, a sealed chamber may be used to surround the structure being inspected and the probes such that the oxygen enriched air mixture may be present in the sealed chamber and may be pumped through the probe to be used as a fluid bearing and/or a gas couplant. Various considerations may impact a selection of a couplant or fluid for a bearing, such as whether internal systems of a structure can be exposed to a fluid such as water, the availability of a fluid, and the difficulty to maintain, collect, and/or recycle a fluid. Similar considerations may impact the selection of the type of inspection method or sensor to be used.
For example, non-contact air ultrasonic transducers typically require lower frequency signals compared to water-coupled ultrasonic transducers. Thus, although water may be a better couplant than air, a system using the pressurized air of an air bearing as a couplant may be selected to eliminate the complications associated with using water with an inspection system. An embodiment of the present invention may use one type of a bearing contact for the driven probe and the same or a different type of bearing contact for the tracking probe, such as where the tracking probe is located inside a part and proximate components which may not readily accept the presence of certain bearing contact such as a water bearing. For example, a driven probe may use a water couplant and bearing and a tracking probe may use an air couplant and bearing. Alternatively, the driven probe may use an air couplant and bearing and the tracking probe may use a water couplant and bearing. Regardless of the type of fluid selected for a couplant or bearing, the additional elements of a couplant or fluid bearing system such as hoses add weight to a probe, particularly water hoses which may make an air couplant or bearing more appropriate for some inspection situations.

IV. X-RAY EMBODIMENTS

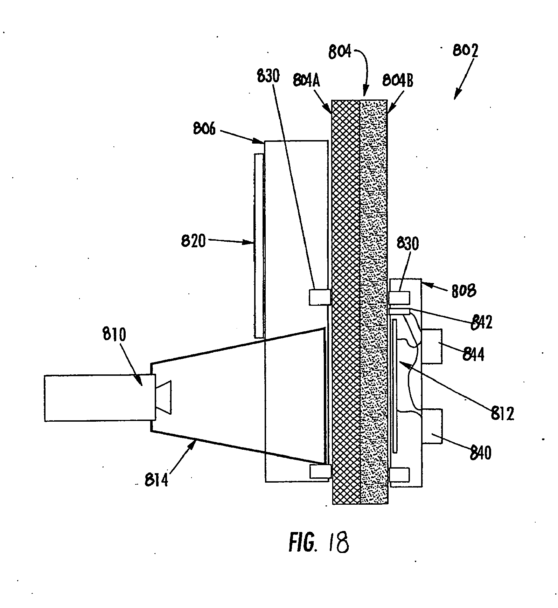

As an alternative or in addition to ultrasonic inspection, embodiments of the present invention can also accomplish versatile high resolution x-ray inspection by integrating an x-ray source, such as a microfocus x-ray tube, with an x-ray detector, such as a complementary metal oxide semiconductor (CMOS) detector, using magnetically coupled devices or probes as described above. The microfocus x-ray source, or tube, may be attached to one of the magnetically coupled devices and a real-time x-ray detector, such as a CMOS detector, may be attached to the magnetically coupled device on the opposite side of the structure under inspection. This configuration allows for real-time inspection with simple alignment of the x-ray source and detector using the magnetic coupling between the devices on opposing sides of the structure. Further, the magnetic coupling of the devices on opposing sides of the structure allows for moving the inspection apparatus along the structure for inspection of large and complex composite, metal, and ceramic structures. Because of particular design requirements for x-ray inspection, embodiments of the present invention designed for x-ray inspection are described in detail below and in reference to Figures 18-22 that illustrate various features of inspection probes which may be modified to accommodate x-ray inspection.

An advantage of using a microfocus x-ray source is that a microfocus x-ray source, or tube, can produce less than one micrometer (µm) diameter focal spot size along the axis of the x-ray beam at approximately 162 kilovolts (kV) energy with an x-ray tube current of 200 microamps (µA). The functional capabilities of microfocus x-ray tubes allow for high resolution, nondestructive inspection of structures, including structures which would otherwise be too thick for conventional inspection using pulse echo or through transmission ultrasonic inspection. In addition, microfocus x-ray sources generate less scattered ionizing radiation than conventional x-ray sources. Further, the use of a microfocus x-ray tube realizes a low-dose x-ray inspection technology that reduces the safety issues related to conventional radiographic inspection. For example, many composite structures can be inspected with x-ray beams with as low as 20 kiloelectronvolts (KeV) energy values. Using such equipment reduces shielding problems and allows operators to be in the area of the inspection operation.

Real time high resolution x-ray detectors, such as a CMOS detector, may be used in conjunction with an x-ray source, such as a CsI, Gd₂O₂S or CaWO₄ x-ray scintillator, for high resolution detecting capability. The use of CMOS detectors have several advantages, including relatively low cost, high resolution imaging capabilities because of small pixel size, and antiblooming capability, meaning that adjacent detectors will not saturate with intense illumination which occurs in CCD type detectors. Further, the amplification circuit and all necessary logic circuits and multiplexing may be integrated onto the CMOS detector chip to allow for high speed data transfer, shuttering, windowing, and asynchronizing of the CMOS detector. Although CMOS detectors may be preferred in many applications, an x-ray detector of the present invention can also be a CCD detector, amorphous selenium, amorphous silicon, or other silicon-based or solid-state linear or array detector. More generally, these detectors may be used without x-ray sensitive scintillators. Further, x-ray detectors may be connected to or include digital microprocessors and/or image processors with auto defect recognition.

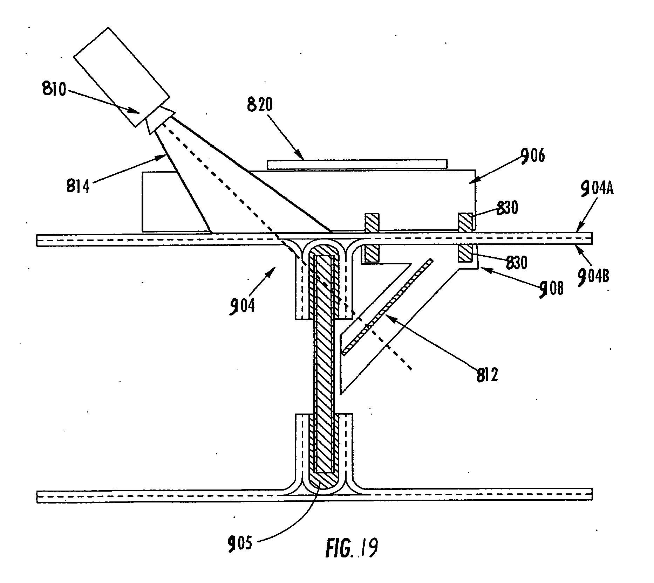

Inspection devices can inspect a variety of structures formed of various materials. For inspection devices which transmit magnetic fields through the structure, however, the structure is preferably non-magnetic, that is, the structure preferably has no magnetic permeability. Structures that may be inspected with an embodiment of an inspection device of the present invention may include, but are not limited to, composites such as carbon fiber or graphite reinforced epoxy (Gr/Ep), non-ferromagnetic metals (e.g. aluminum alloy, titanium alloy, or aluminum or titanium hybrid laminates such as GLARE or Ti/Gr), and polymers. The surfaces and intermediate surfaces commonly referred to as septums, which collectively define the test article are non-magnetic to allow magnetic coupling between the probes. For example, the structure 4 in FIG. 18 is a septumized core material and the structure 104 in FIG. 19 is a bonded composite pi-joint weld.

While a portion of a relatively simple structure is depicted in FIG. 18, a structure being inspected may be any myriad of shapes and/or sizes and used in a variety of applications, including aircraft, marine vehicles, automobiles, spacecraft and the like, as well as buildings. Moreover, the structure may be inspected prior to assembly or following assembly, as desired.

Components for an x-ray scanner such as an x-ray source and an x-ray detector, may be supported on opposing surfaces of the structure and may include magnetically coupled probes. Using magnetically coupled probes aligns the x-ray source and x-ray detector as required for the inspection. For example, a weldline may be inspected at a 45 degree angle relative to the skin of the structure in which case the x-ray source, and possibly also the x-ray detector, could be oriented at an angle of 45 degrees with respect to the skin. In such off-axis (non-perpendicular) orientation applications, the x-ray source and x-ray detector may not be aligned across from each other, but at corresponding positions such that the focus of the x-ray signals are transmitted from the x-ray source through the structure to the x-ray detector. In an embodiment of the present invention for such an application, the x-ray source, and possibly the x-ray detector, can be adjusted or set at a specific angle using a pivot point on the magnetically coupled probe. The specific angle for the x-ray source, and possibly x-ray detector, may be motor-controlled or manually adjusted.

Embodiments of the present invention may include wireless operation, such as wireless transmission of the digital x-ray images captured by the x-ray detector. Accordingly, at least one of the magnetically coupled probes, typically the probe supporting the x-ray detector, can be used without having to feed wires into the structure for transmission of the digital images, and possibly also for powering the device. In many situations, the wireless operation, and cordless capability, of an inspection probe may be advantageous, such as in a situation where the magnetically coupled probe and x-ray detector are used in limited access areas, such as inside a hat stringer or along the inside of an internal bondline. To provide a completely wireless inspection probe, battery power may be used for any type of equipment which requires power, such as the x-ray detector and a wireless transmitter. A wireless transmitter be any type of technology which permits transmission of the digital x-ray images captured by the x-ray detector, such as a cellular technology, Bluetooth wireless transmission, or light means for wireless transmission of data. Wireless operation can also be provided where other elements of a probe are generated by battery power, such as operating a battery-powered x-ray source with a wireless controller. In addition, an optical imager may be used to provide visual identification of the internal position or feature of the structure under inspection to assist in the interpretation and/or location of the x-ray inspection probe on an opposing surface of the part. For example, an inspection probe located on the outside of a complex structure under inspection can include, in addition to the x-ray source, a display for displaying digital images captured by the x-ray detector or an optical imager of the magnetically coupled probe on the opposing surface of the structure. Permitting the technician to immediately view in real time the images captured by an x-ray detector or an optical imager of a magnetically coupled probe on the opposing surface of the structure may improve the inspection of the structure, such as by providing the technician the ability to interpret the location of the magnetically coupled probe and the images captured thereby.

FIG. 18 is a schematic diagram of an inspection apparatus of the present invention employing x-ray inspection. The inspection apparatus **802** is shown inspecting a septumized core material **804** and a first probe 806 disposed proximate a first surface **804a** of the structure **804** and a second probe **808** disposed proximate an opposed second surface **804b** of the structure. Suitable probes are described in U.S. Patent 6,722,202 and co-pending U.S. patent applications 10/943,088; 11,041,601; 10/752,890; 10/943,170; 10/943,135; and 11/041,499, entitled "Non-Destructive Stringer Inspection Apparatus and Method," filed January 24, 2005. The shape and size of an inspection probe, and its housing may be any shape or size capable of operating in accordance with the present invention for x-ray inspection such as shown in the example embodiments of Figures 18-22.

Each probe **806, 808** includes a magnetic coupling device **830** supported by the probes **806, 808**, such as disposed within a housing of each probe. The magnetic coupling devices **830** magnetically attract the first and second probes **806, 808** toward the respective surfaces of the structure **804**. Magnetic coupling devices, such as magnets and/or ferromagnetic material inserts, may also be used to provide alignment between the first and second probes **806, 808**, more particularly the inspection sensors thereof such as a microfocus low dose x-ray source **810** of the first probe **806** and a digital imager x-ray detector **812** of the second probe **808**. Magnetic coupling may be adjusted by changing the size and/or strength of a magnet, such as a permanent magnet, or the strength of an electromagnet. For example, to decrease friction control, electromagnetic strength may be decreased, but to increase the holding support of the magnetic coupling such as when using an inspection device in an inverted position, electromagnetic strength may be increased.

The probes **806, 808** include x-ray inspection sensors for inspecting the structure **804** as the probes **806, 808** are moved. Advantageously, the probes include x-ray sensors which cooperate to provide low-dose, high resolution digital imaging of the structure under inspection. For example, a first probe **806** includes a microfocus x-ray source tube **810**, and the second probe **808** includes a digital imaging x-ray detector **812**. A second probe **808** includes an x-ray detector **812** and may also include an optical sensor such as a camera **842** which is used to provide visual images of a surface **804b** to aid in the inspection of the structure **804** by providing visual information about the location of the second probe **808** on the second surface **804b** of the structure **804**. The first probe 6 preferably includes a radiation shield **814** to contain the x-ray emissions from the microfocus x-ray source **810**.

At least one probe, typically the second probe with the x-ray detector, may also include a wireless transmitter **840** and a battery **844**. The wireless transmitter **840** is communicably coupled to the x-ray detector **812** of the second probe **808**, and possibly other inspection sensors such as a camera **842**. The battery **844** is used to power elements of a probe which require an external power source. By using a wireless transmitter **840** and a battery **844**, a probe **808** is capable of functioning completely free of any wires or physical connections. Accordingly, the probe **808** is capable of operating to inspect a limited access structure such as being positioned and moving within an enclosed structure with limited access to insert the probe **808** or being positioned and moving along a limited access structure such as a bond line. At least one probe, typically the first probe with the x-ray source **810**, includes a display **820** for displaying the x-ray images captured by the x-ray detector **812** and/or images captured by other sensors such as a camera **842**. By including a display **820** a technician can analyze the inspection data and/or positional information in real time during the inspection of the structure **804**. A display may be co-located with a probe of an apparatus as in FIG. 18 or communicably connected to an x-ray detector and remotely located. To maintain consistency throughout the remainder of this application, the probe which includes the x-ray source is referred to as the first probe and the probe which includes the x-ray detector is referred to as the second probe.

To conduct non-destructive x-ray inspection, the probes are disposed proximate to and generally in contact with opposed surfaces **804a, 804b** of a structure **804** while maintaining alignment and magnetic attraction. As described above, contact members, such as wheels, ball bearings, fluid bearings, skids, or treads, may be used to maintain adequate spacing between the probe and the surface of the part under inspection. In such a manner, the contact members may be used to prevent the probe from contacting and possibly damaging the surface of the part. Further, the contact members provide the probe the ability to translate along the surface of the part for continuous scanning, and to reduce the frictional drag of the probe on the surface of the structure being inspected to permit smooth translation of the probe across the surface. As such, the orientation and spacing of the probe relative to the surface of the structure may be maintained by the contact members without requiring complex motion control systems. Independence from motion control systems reduces the cost of inspection and permits inspection where a robotic arm or other conventional motion control system would have difficulty positioning the sensors.

The x-ray inspection sensors are activated to inspect the structure. Although not shown, a drive element, such as a battery or other power source, is generally associated with the inspection sensor of the first probe so as to actuate the inspection sensors which transmit x-ray signals through the structure for detection by detectors on an opposing side of the structure.

While transmitting x-ray signals, the probes **806, 808** are moved along the surfaces **804a, 804b**. While the motive force required to move the probes along the respective surfaces of the structure may be applied in various manners, typically at least one probe includes a drive motor, such as a smart stepper motor. Magnetic attraction between the probes **806, 808** and, more particularly, between the magnetic coupling devices **830**, causes the non-driven probe, also referred to as a follower, keeper, holder, or tracking probe, moves in correspondence with the driven probe. The tracking probe moves to remain in an aligned, opposed position relative to a driven probe as the driven probe is moved along a first surface of a structure under inspection even with the tracking probe riding on the interior of a cylindrical structure or other structure having a closed shape.

Signals received by the detector(s) of a probe **808** can be stored along with an indication of the time or position at which the x-ray signals are received. Accordingly, each probe **806, 808** may included an encoder, such as an optical encoder, a linear encoder, an optical sensor, an optical imager or camera, a directional sensor, or wheel encoder to provide feedback of the position, speed, direction, and/or velocity of the probe. For example, embodiments of the present invention may use a smart stepper motor and an optical encoder to accurately position and move the probes for inspection. The ultrasonic signals may be stored by a memory device electrically connected with the probe **808**. By analyzing the x-ray signals received by the detector(s), the integrity of the structure **4** as well as any flaws can be determined.

FIG. 19 is a schematic diagram of yet another inspection apparatus of the present invention employing x-ray inspection. The inspection apparatus is shown inspecting a bonded composite pi-joint. Due to the particular shape of the PI-joint, the x-ray source **810** of the first inspection probe **906** is oriented at an angle relative to the first surface **904a** of the structure **904** under inspection. The x-ray detector **812** of the second probe **908** is oriented at a corresponding angle to the second surface **904b** of the structure **904** corresponding to the incident angle of the x-ray source **810.** The x-ray source **810** and x-ray detector **812** may be fixed at these corresponding angles of orientation with respect to the respective surfaces of the structure under inspection. Alternatively, an embodiment of the present invention may include mechanics which permit the angle of the x-ray source **810** and the x-ray detector **812** to be adjusted to any specific angle, such as using rotational mechanics supported by the magnetically coupled probes to re-orient the incident angles of the x-ray source and x-ray detector. A motor may be used to control the specific incident angles for the x-ray source and x-ray detector. In such a manner, an inspection apparatus may be electronically controlled by a motion controller such as a general purpose computer including computer program software instructions to operate the motors for the rotational mechanics to control the incident angles of the x-ray source and x-ray detector.

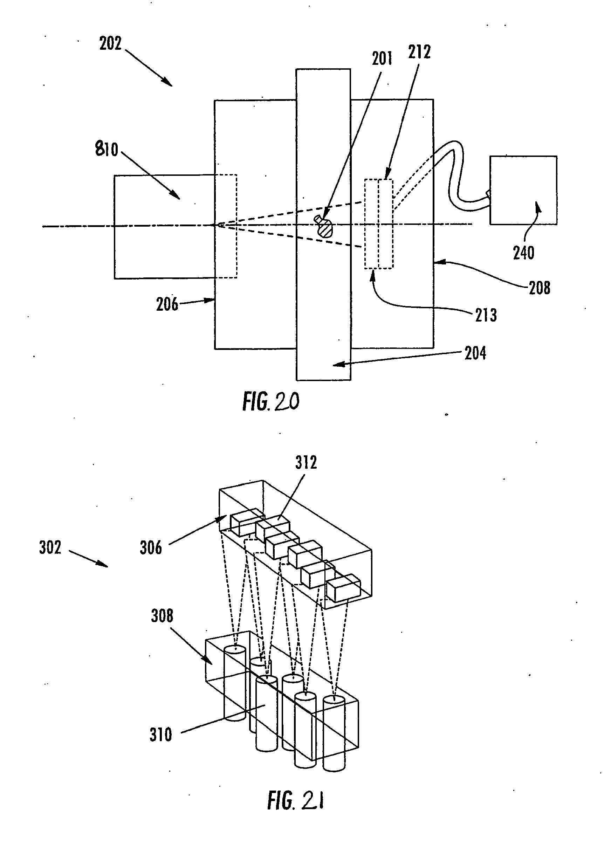

In FIG. 20, the inspection apparatus **200** includes magnetically coupled inspection probes **206**, **208** that may be configured to house magnetically attracted ring magnets to provide corresponding orientation between the magnetically coupled probes and inspection sensors. For example, the first probe **206** may include a microfocus x-ray tube **810** disposed within the center of a ring magnet. Similarly, the second probe **208** may include an x-ray detector, such as a CMOS detector **212** and fluorescent screen **213** disposed within the center of a ring magnet. The inspection apparatus **200** may also include a computer image processor **204** located proximate to or separate from the second probe **208**. The computer image processor **240** may be used to analyze the digital images captured by the CMOS detector **212** to produce a visual image made available to a technician to analyze the condition of the structure **204** under inspection, such as to identify a defect **201** within the structure **204**. Pattern recognition may also be automated.

In FIG. 21, the inspection apparatus **302** includes a quasi-linear array of microfocus x-ray sources **310** and corresponding x-ray detectors **312**. The array of x-ray sources **310** and x-ray detectors **312** allow scanning larger areas rapidly. The multiple images produced by the array of x-ray detectors **312** can be digitally combined to produce a single inspection image.

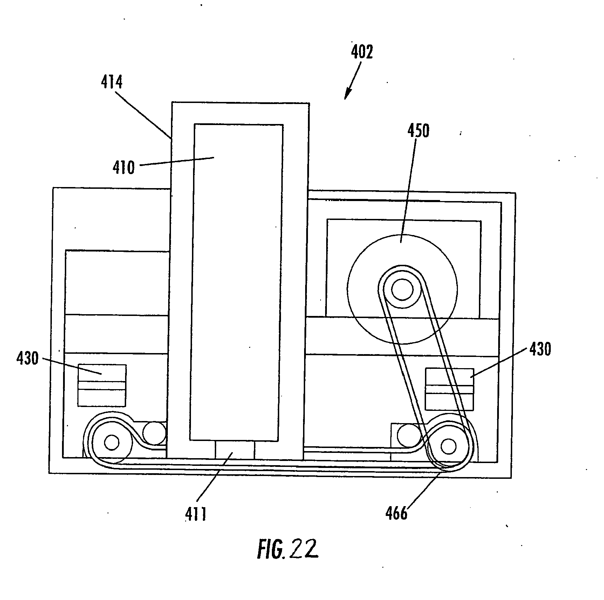

In FIG. 22, the inspection probe **402** includes an x-ray source **410** surrounded by ceramic radiation shielding **414.** The ceramic radiation shielding includes an exit window **410** which permits the transmission of x-ray inspection signals from the x-ray source **410**. The inspection probe **402** includes a drive motor **450**, such as a smart stepper motor, which provides translational mechanics for the motion of the probe **402** along the surface of a structure under inspection. For example, the probe includes contact members **466**, such as tracked wheels, i.e., wheels which rotate a tread.

For non-destructive x-ray inspection, probes are magnetically coupled to opposing surfaces of the structure under inspection. An inspection device may be autonomous with a feedback-controlled motor and/or a positional encoder. An inspection device may include wireless operation for at least one probe. A display may be included to assist in the inspection of a structure by providing real-time visual images from an x-ray detector or an optical imager.

Many modifications and other embodiments of the inventions set forth will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed, they are used in a generic and descriptive sense only and not for purposes of limitation.

## Claims

1. A probe (14A) for inspecting a structure (12) comprising:
a housing (24) configured for traveling over a first surface of the structure under inspection:;
a ring magnet (18) carried by said housing (24);
a sensor (32) disposed within said ring magnet (18);
**characterised by** a fluid inlet (22) support by said housing (24) and wherein said fluid inlet (22) is in fluid communication with said sensor (32) for distributing fluid between said sensor (32) and the surface of the structure (12) being inspected to provide a coupling path for signals of said sensor (32).

2. The probe of Claim 1, further comprising an array of ultrasonic transducers, carried by said housing.

3. The probe of Claim 1, further comprising at least one ball bearing (128) supported by said housing and for contacting the first surface of the structure.

4. The probe of Claim 3, wherein said probe comprises a plurality of at least three ball bearings.

5. The probe of Claim 3, further comprising a water column skirt (600) disposed on said housing, wherein said fluid inlet comprises at least one fluid outlet channel and said water column skirt is disposed around at least one of said fluid outlet channels.

6. The probe of Claim 5, wherein said water column skirt (600) comprises a flexible cowling.

7. The probe of Claim 5, wherein said fluid inlet comprises at least one fluid outlet channel, and wherein said water column skirt comprises:
a cylindrical tube disposed around at least one of said fluid outlet channels of said fluid inlet; and
a skirting projecting radially outwardly from said cylindrical tube and said housing.

8. The probe of Claim 7, wherein the distal edge of said skirting from said housing comprises a low-friction substance.

9. The probe of Claim 1, wherein said housing comprising:
a plurality of channels to evenly disperse a flow of fluid over the surface of said housing in proximity with a surface of the structure being inspected to create a fluid bearing.

10. A method of inspecting a structure comprising:
positioning a first probe on a first surface of the structure and a second probe on an opposed second surface of the structure;
establishing magnetic attraction between the first and second probes such that the first and second probes are drawn toward the first and second surfaces of the structure, respectively, for holding the probes on the first and second and second surfaces of the structure, respectively;
aligning the first and second probes using a ring magnet of the first probe and a ring magnet of the second probe;
moving one of the first and second probes along a respective surface of the structure, wherein magnetic coupling between the probes causes the other probe to be moved along the opposed surface of the structure;
transmitting inspection signals into and receiving inspection signals from the structure as one of the first and second probes is moved along a respective surface of the structure and the other probe is correspondingly moved along the opposed surface of the structure; and coupling inspection signals between at least one of the driven and second probes and the first and second surfaces of the structure, respectively, **characterised by** the step of coupling inspection signals comprises the step of pumping a fluid between the respective probe and the respective surface.

11. The method of Claim 10, wherein the step of positioning a first probe on a first surface of the structure and a second probe on an opposed second surface of the structure is performed by supporting at least one of the first and second probes on a respective surface of the structure with at least one ball bearing such that the respective probe moves along the respective surface of the structure by rolling the respective probe along the respective surface on the at least one ball bearing.

12. The method of Claim 10, further comprising the step of pumping a fluid between at least one of the first probe and the second prove and the first and second surfaces of the structure, respectively, to create a fluid bearing between the respective probe and the respective surface.

13. The method of Claim 12, further comprising the step of coupling inspection signals between at least one of the first probe and the second probe and the first and second surfaces of the structure, respectively.

14. The method of Claim 12, further comprising the step of pumping water between at least one of the first probe and the second probe and the first and second surfaces of the structure, respectively, to create a water bearing between the respective probe and the respective surface.

15. the method of Claim 12, further comprising the step of pumping air between at least one of the first probe and the second probe and the first and second surfaces of the structure, respectively, to create an air bearing between the respective probe and the respective surface.
